# EUROPÄISCHE PATENTSCHRIFT

(11) **EP 4 406 802 B1**
(45) Veröffentlichungstag und Bekanntmachung des Hinweises auf die Patenterteilung: **15.07.2026**
(21) Anmeldenummer: 24150620.3
(22) Anmeldetag: 08.01.2024
(51) Int. Cl.: B60W 40/09, B60W 50/10, B60W 50/12, B60W 50/16, B60W 60/00

(54) **VERFAHREN ZUR STEUERUNG EINES FAHRZEUGS DURCH EIN ASSISTENZSYSTEM, ASSISTENZSYSTEM UND FAHRZEUG**
METHOD FOR CONTROLLING A VEHICLE BY MEANS OF AN ASSISTANCE SYSTEM, ASSISTANCE SYSTEM AND VEHICLE
PROCÉDÉ DE COMMANDE D'UN VÉHICULE PAR UN SYSTÈME D'ASSISTANCE, SYSTÈME D'ASSISTANCE ET VÉHICULE

(30) Priorität: 27.01.2023 DE 102023200693
(43) Veröffentlichungstag der Anmeldung: 31.07.2024
(73) Patentinhaber: VOLKSWAGEN AG, 38440 Wolfsburg (DE)
(72) Erfinder: El Amouri, Amira, 38440 Wolfsburg (DE); Schacher, Samuel, 10629 Berlin (DE); Mennenga, Björn, 38126 Braunschweig (DE); Kabil, Sevsel Gamze, 38102 Braunschweig (DE)

(56) Entgegenhaltungen:
- EP-A1- 3 831 683
- EP-A2- 2 862 773
- WO-A1-2010/101749
- DE-A1- 102014 000 769
- DE-A1- 102020 106 262
- US-A1- 2020 262 478
- US-A1- 2022 379 883

## Beschreibung

Die vorliegende Erfindung bezieht sich auf ein Verfahren zur Steuerung eines Fahrzeugs durch ein Assistenzsystem, und insbesondere zum autonomen Bewegen eines Fahrzeugs in einen (variabel) optimierten dynamischen Fahrzustand und ein Fahrzeug, welches mit einem System zur Steuerung eines Fahrzeugs durch ein Assistenzsystem und insbesondere zum autonomen Bewegen eines Fahrzeugs in einen (variabel) optimierten dynamischen Fahrzustand ausgestattet ist.

Fahrzeuge mit autonomer Fahrfunktion sind bereits bekannt. Bei derartigen Fahrzeugen kann eine Steuereinrichtung sowohl eine Längsführung, also das Beschleunigen und Abbremsen des Fahrzeugs, als auch eine Querführung, also das Lenken des Fahrzeugs, übernehmen. Fahrzeuge mit einer derartigen autonomen Fahrfunktion können teilautonom oder vollständig autonom ausgebildet sein. Bei teilautonom fahrenden Fahrzeugen wird die Steuerung des Fahrzeugs lediglich zeitweise, beispielsweise während bestimmter Fahrsituationen durch die Steuereinrichtung übernommen. Bei vollständig autonom fahrenden Fahrzeugen ist das Eingreifen eines Menschen nicht mehr notwendig. Der Autonomiegrad eines Fahrzeugs wird in verschiedene Level unterteilt, wobei Fahrzeuge mit einem höheren Autonomiegrad einem höheren Level zugeordnet sind.

Es ist davon auszugehen, dass in Zukunft verstärkt Fahrzeuge unterwegs sein werden, die vollständig autonom gesteuert werden. Ab der Zuordnung eines Fahrzeugs zu einem Autonomielevel 4 oder höher ist das Fahrkönnen einer im Fahrzeug befindlichen Position kein relevanter Faktor, um das Fahrzeug zu steuern oder ein Fahrziel sicher erreichen zu können.

Schon heute sind Level 2+ Fahrzeuge in der Lage die Situationen und das Fahrgeschehen zu bewerten und das Fahrzeug zu führen, die fahrende Person zu unterstützen und/oder die fahrende Person auf Gefahren hinzuweisen. Moderne Systeme können die Fahrsituation oftmals schon besser einschätzen als menschliche Fahrer. Dies ist insbesondere durch die enorme Rechenleistung der im Fahrzeug verbauten Hardware und die Vielzahl der zur Erfassung der Verkehrssituation zur Verfügung stehenden Sensoren möglich. Diese Sensoren können oftmals auch Signale erfassen oder Bestimmen die für einen Menschen nicht wahrnehmbar sind. Beispiele für derartige Signale sind IR, Sonar, Radar, Lidar und andere. Mindestens Fahrzeuge, die dem Autonomielevel 3 zugeordnet sind, können zumindest abschnittsweise die Kontrolle über das Fahrzeug und dessen Fahrt übernehmen.

Die Autonomie des Fahrzeugs bietet neue Möglichkeiten zur Gestaltung von Schnittstellen zur Kommunikation zwischen Mensch und Fahrzeug. Es ist zu erwarten, dass zukünftig Bedieninterfaces neue Gestaltungsformen annehmen. Joysticks, Touchpads oder in weiterer Zukunft sogar Gehirn-Computer-Schnittstellen (Brain-Computer-Interfaces) können an die Stelle der herkömmlichen Steuergeräte, wie Lenkung und Pedale, treten bzw. diese ersetzen. Auch das gesamte Interieur des Fahrzeugs kann entsprechend umgestaltet werden. So ist es in Zukunft bei derartigen Fahrzeugen nicht mehr notwendig, dass ein Fahrzeugführer in Fahrtrichtung schaut, um das Verkehrsgeschehen beobachten zu können.

Eine Folge dieser zunehmenden Autonomie der Fahrzeuge ist, dass die Interaktion mit dem Fahrer überdacht werden sollte. Es ist zu erwarten, dass bei zunehmender Autonomie des Fahrzeugs die Fahrerfahrung der Insassen abnimmt. Eventuell kann auch ein verändertes Bedieninterface dazu führen, dass nicht mehr alle Eingaben eines Fahrers wie bisher an das Fahrzeug übertragen werden. Beispielsweise ist bei einer Lenkung mittels Joystick eine direkte Übertragung der Fahrereingabe an das Fahrzeug nicht mehr möglich, da die Eingabesignale in Signale zur Steuerung des Fahrzeugs, beispielsweise deren Lenkung übersetzt werden müssen. Eventuell können solche geänderten Eingabegeräte auch zu einer verringerten Genauigkeit des Eingabesignals führen. So könnte beispielsweise bei der Nutzung eines Touchpads zur Eingabe eines Fahrsignals erwartet werden, dass die Genauigkeit gegenüber einem Lenkrad abnimmt. Dies kann zu verschlechterten Fahrmustern führen und das Fahrerlebnis schmälern.

Bereits bei Fahrzeugen des Autonomielevels 2+ kann das Fahrzeug gegenüber einem Menschen über ein mehr an Wissen und/oder Fähigkeiten verfügen. Die genauere Kenntnis der Fahrfunktion, der Fahrsituation, des Fahrzeugs und dessen Fähigkeiten in verschiedenen Fahrsituationen erlaubt es einem solchen Fahrzeug, das Fahrzeug bestmöglich zu steuern. Insbesondere in Kombination mit By-Wire-Ansteuerung der Aktoren bietet sich die Möglichkeit die vom Fahrzeug berechnete Fahrfunktion mit einer Eingabe eines Insassen, beispielsweise des Fahrers zu kombinieren fusionieren und so die Fahrweise abweichend von der berechneten Fahrweise auf Wünsche des Fahrers anzupassen.

Ebenso ist es von einigen Nutzern gewünscht, auch bei Fahrzeugen des Autonomielevels 3, 4 oder 5 dieses selber zu fahren.

Aus US 2018/025 7 655 A1 ist ein System und Verfahren zur Steuerung der Bremsen und des Gaspedals eines Fahrzeugs bekannt. Ziel ist es, die Absicht eines Fahrers, die Position der Bremsen und des Gaspedals zu ändern, vorherzusagen. Durch ein solches System soll die Reaktionszeit bis zum vollständigen Betätigen der Bremsen oder des Gaspedals dadurch verringert werden, dass das System bereits vor dem Fahrer das entsprechende Pedal betätigt. Diese Aktion wird auf der Grundlage von Umgebungsdaten vorhergesagt. Durch die Erkennung der Umgebung kann das System vorhersagen, wann ein Fahrer die Absicht hat, zu beschleunigen oder zu bremsen. So kann dieses System beispielsweise erkennen, dass sich das Fahrzeug einer Rampe nähert, und das Fahrzeug frühzeitig auf ein zu erwartendes Beschleunigen durch den Fahrer vorbereiten, um die Kraftstoffeffizienz durch die frühzeitige Beschleunigung zu verbessern. Andererseits kann das System erkennen, dass eine Gefahr besteht, und um einen Unfall zu vermeiden und die Sicherheit der Fahrzeuginsassen zu erhöhen, durch eine frühzeitige Vorbereitung des Bremsvorgangs verhindern, dass das Fahrzeug beispielsweise auf ein vorausfahrendes Fahrzeug auffährt.

Als ein geeigneter Parameter für die Ermittlung einer voraussichtlichen Änderung einer Position von Brems- oder Gaspedal ist eine Beschleunigung des Gaspedals bei dessen Positionsänderung durch den Fahrer identifiziert. So kann beispielsweise die sofortige und vollständige Rückstellung des Gaspedals auf eine umgehende Betätigung des Bremspedals hinweisen. In anderen Ausführungsformen wird die Vorhersage auf Basis von Navigationsdaten getroffen. So ist beispielsweise angedacht, eine Anstehende Beschleunigung nach der Einfahrt auf eine Schnellstraße aus den Navigationsdaten vorherzusagen.

Das System kann sich auf bestimmte Fahrer und deren Fahreigenschaften einstellen. So ist ein Speicher für Fahrerspezifische Daten vorgesehen und ein dem jeweiligen Fahrer zugeordnetes Fahrprofil kann manuell oder durch eine automatisierte Fahrererkennung ausgewählt werden. Auch andere Fahrzeugeinstellungen wie Sitzposition oder Spiegelausrichtung kann entsprechend automatisiert durch entsprechende Aktoren des Fahrzeugs eingestellt werden.

Die Patentanmeldung US 2007/0012499 A1 beschreibt ein Fahrassistenzsystem für ein Fahrzeug, das eine Betätigungsreaktionskraftsteuerung des Gaspedals, eine Antriebskraftsteuerung oder eine Bremskraftsteuerung in einer der Verkehrssituation angemessener Weise ausführt. Dazu berechnet das Fahrassistenzsystem ein Risikopotenzial, das den Grad der Konvergenz zwischen dem Fahrzeug und einem vor dem Fahrzeug befindlichen Hindernis auf der Grundlage eines vorgegebenen Steuerungsmusters angibt. Auf der Grundlage dieses Risikopotenzials werden dann die Gaspedalbetätigungsreaktion, die Antriebskraft des Fahrzeugs und/oder die Bremskraft des Fahrzeugs gesteuert. Darüber hinaus wird jedoch auch die Absicht des Fahrers in Bezug auf die Beschleunigung und Verzögerung berücksichtigt. Dazu ist angedacht, einen Betätigungszustand des Gaspedals als Stellgröße heranzuziehen.

In einem Beispiel wird durch eine Antriebskraftsteuerungsvorrichtung einer vom Fahrer angeforderten Antriebskraft eine Zusatz-Antriebskraft zu- oder abgeschlagen, um eine berechnete Soll-Antriebskraft zu berechnen. Basierend auf der Soll-Antriebskraft wird dann eine Motorsteuerung vorgenommen. Zur Berechnung der Zusatz-Antriebskraft wird insbesondere eine Größe herangezogen, die mit dem Risiko einer Kollision mit einem vorausfahrenden Fahrzeug korreliert. Wird der vom Fahrer angeforderten Antriebskraft die Zusatz-Antriebskraft abgeschlagen, nimmt der Fahrer dies dadurch wahr, dass die vom Fahrer erwartete volle Antriebskraft nicht (zumindest nicht vollständig) in eine Beschleunigung umgesetzt wird, obwohl er das Gaspedal betätigt. Wenn die geänderte (Soll-) Antriebskraft größer ist als der Fahrwiderstand, spürt der Fahrer dies als Beschleunigungsverhalten. Ist die überarbeitete (Soll-) Antriebskraft kleiner als der Fahrwiderstand, wird dies als negative Beschleunigung beziehungsweise als Abbremsen wahrgenommen.

Aus US 2021/038 0 080 A1 ist ein System zum unterstützten Fahren eines Fahrzeugs bekannt. Bei diesem System ist vorgesehen, die Reaktionszeit des Fahrers zu messen und die Steuerungsvorgänge anzupassen, um die Reaktionszeit des Fahrers zu berücksichtigen oder zu kompensieren. In Erwartung einer (beispielsweise durch die Reaktionszeit) verzögerten Eingabe des Fahrers können dadurch vorausschauende Maßnahmen ergriffen werden, um potenziell gefährliche Situationen zu vermeiden. Das Fahrzeug kann beispielsweise frühzeitig abgebremst werden, sodass dem Fahrer mehr Zeit zur Verfügung steht, um bei einer von Ihm erkannten Gefahrensituation auf diese zu reagieren. Das System kann beispielsweise dann eingreifen, wenn der Fahrer nicht innerhalb einer vorgegebenen Zeitspanne auf eine vom System erkannte Gefahrensituation reagiert. Das System kann dabei auch Fahrzeugparameter wie beispielsweise die Empfindlichkeit des Lenkrads oder der Bremsen berücksichtigen.

Zur Steuerung ist ein Bremssignalgenerator vorgesehen, der die vom Fahrzeugrechner empfangenen Steuersignale oder die vom Pedalsystem empfangenen elektrischen Signale in Bremssignale umwandeln kann.

Das mit diesem System ausgestattete Fahrzeug kann auch ein Sensorsystem umfassen, welches Daten für eine autonome Fahranwendung zur Verfügung stellen kann. Ebenfalls ist mindestens ein Sensor zur Erkennung des mentalen Zustands des Fahrers beschrieben. Dessen Zustand kann auch unter Ausnutzung einer künstlichen Intelligenz (Kl, auch AI (artificial intelligence)) bestimmt oder vorhergesagt werden. Für das KI-System ist beschrieben, dass es in einer unüberwachten Lernimplementierung eine Clusteranalyse verwendet, um eng zusammenhängende Daten zu identifizieren und/oder ein neuronales Netz nutzt, um eine Mustererkennung in Bezug auf den Zeitpunkt und die Art der Fahrereingaben im Kontext einer Bedingung zu implementieren. Dies soll dann zur Erstellung eines Modells zur Vorhersage des Aufmerksamkeitsgrads des Fahrers auf der Grundlage der Fahrereingaben verwendet werden. Weiterhin sind Assistenzsystem zum Steuern eines Fahrzeugs aus WO 2010/101749 A1, US 2020/262478 A1 und US 2022/379883 A1 bekannt.

Es besteht daher der Bedarf an einem System zur Steuerung eines Fahrzeugs, welches auf Wunsch mit dem Fahrer interagiert und die Fahrzeugsteuerung den Wünschen und/oder dem Können des Fahrers anpasst. Weiterhin besteht der Bedarf an einem Verfahren zur Steuerung eines Fahrzeugs durch ein Assistenzsystem, welches die Fahrzeugsteuerung den Wünschen und/oder dem Können des Fahrers anpasst.

Verfahrensseitig wird diese Aufgabe durch ein Verfahren gemäß Anspruch 1 gelöst.

Durch dieses Verfahren ist es möglich, dass der Fahrer in die Fahrzeugsteuerung eingreift und so seinem Wunsch, das Fahrzeug zu steuern nachkommen kann. Weiterhin ist es möglich, dass der Fahrer die Fahrweise des Fahrzeugs in einem gewissen Rahmen selbst beeinflussen kann. Gleichzeitig wird jedoch fahrzeugseitig verhindert, dass das Fahrzeug durch eine Fahranweisung des Fahrers in einen unkontrollierbaren oder kritischen Zustand gerät. Vielmehr bleibt auch bei Eingreifen des Fahrers das Fahrzeug immer auf einem zum vorgegebenen Fahrziel führenden Fahrweg und an jedem Punkt auf diesem Fahrweg in einem stabilen Fahrzeugzustand.

Es ist dabei vorzugsweise nicht notwendig, dass der Fahrer alle Funktionen zu Führung des Fahrzeugs auf dem Fahrweg zum Ziel des Fahrzeugs selbständig steuert. So ist beispielsweise denkbar, dass der Fahrer lediglich lenkt und die (positive oder negative) Beschleunigung des Fahrzeugs durch das Assistenzsystem vorgenommen wird. Denkbar wäre beispielsweise auch, dass der Fahrer Schaltzustände eines Getriebes (manuell oder teilautomatisch) vorgibt, um einen Motor des Fahrzeugs beispielsweise in einem besonders hochtourigen und als sportlich empfundenen Drehzahlbereich oder einem anderen, besonders energiesparenden Drehzahlbereich betreiben zu können. Vorzugsweise kann der Fahrer somit auswählen, welche Fahrzeugkomponenten er selbständig steuern möchte und welche Steuerungen durch das Assistenzsystem vorgenommen werden sollen. Vorzugsweise erfolgt die Steuerung der nicht vom Fahrer übernommenen Fahrzeugkomponenten durch das Assistenzsystem, wobei insbesondere bevorzugt diese Steuerung an Fahrzeugsteuerbefehle des Fahrers angepasst sind.

Ein Assistenzsystem welches eine wie oben beschriebene Fahrzeugsteuerung ermöglicht, kann in Anlehnung an die Bezeichnung ADAS (Advanced Driver Assistance Systems), als Advanced Driving Enhancement Systems (ADES) bezeichnet werden, da es nicht nur ermöglicht, den Fahrer zu unterstützen, sondern sogar das Fahrerlebnis zu verbessern oder aufzuwerten.

Vorzugsweise ist es durch ein solches Verfahren möglich, dass der Fahrer durch seine Steuerbefehle direkt Einfluss auf die Fahrweise des Fahrzeugs nimmt. Der Fahrer hat dabei vorzugsweise das Gefühl, dass er die Steuerung des Fahrzeugs oder zumindest die von ihm zur Selbststeuerung ausgewählten Fahrzeugkomponenten selbst durchführt und lediglich die anderen Fahrzeugkomponenten durch das Assistenzsystem seinen Eingaben angepasst werden. Dadurch kann das Fahrerlebnis des Fahrers seinen Vorlieben angepasst werden. Das Assistenzsystem passt vorzugsweise die Steuerung übriger, nicht vom Fahrer gesteuerter Komponenten, auf diejenige Fahrweise an, die aus den Steuersignalen des Fahrers abgeleitet wird. Je nach Fahrer- und/oder Insassenwunsch kann so das Fahren komfortabler, effizienter und/oder sportlicher gestaltet werden. Vorzugsweise erfolgt dies ohne störende Auswirkung auf das Steuerungsgefühl, wie es der Fahrer wahrnimmt.

Vorzugsweise erfolgt die Berechnung des zweiten Fahrwegs unter Berücksichtigung von Daten zu einem Fahrmodus und/oder einer Fahrcharakteristik eines Fahrers, mehrerer Fahrer und/oder einer Fahrergruppe. Diese können aus einem unmittelbaren Steuerbefehl des Fahrers abgeleitet werden. Es ist jedoch denkbar und bevorzugt, dass auch vorherige Steuerbefehle dazu herangezogen werden, beispielsweise vorherige Steuerbefehle während der aktuellen Fahrt. Vorzugsweise werden daher Steuerbefehle des Fahrers in einer Datenbank gespeichert. Diese Datenbank kann Einträge zur aktuellen Fahrt, aber auch zu verschiedenen Fahrten umfassen. Vorzugsweise sind die Datenbankeinträge bestimmten Fahrern oder Fahrzeuginsassen zugeordnet. Dadurch ist es beispielsweise möglich nach erkennen eines aktuell fahrenden Fahrers durch das Assistenzsystem, einen zu diesem Fahrer (und gegebenenfalls weiteren Fahrzeuginsassen) passenden Datensatz aus der Datenbank zu laden.

Die Datenbank kann auch Datensätze zu Fahrmodi umfassen, die für größere Fahrergruppen geeignet sein können. Vorzugsweise umfasst die Datenbank daher einen oder mehrere Datensätze, die zu einem Fahrmodus und/oder einer Fahrcharakteristik korrelieren, die ausgewählt aus einer Gruppe, die einen Komfortfahrmodus, einen Energiesparmodus, einen Sportmodus, einen Schnellstraßenmodus, einen Stadtverkehrsmodus, einen Langstreckenmodus, einen Arbeitsmodus, einen Trainingsmodus, einen Personentransportmodus, eine Warentransportmodus, einen Gefahrguttransportmodus und einen synthetischen Datensatz, beispielsweise aus einer Simulation, umfasst.

Vorzugsweise wird ein Signal zwischen der Mensch-Maschine-Schnittstelle und einem Aktuator zur Steuerung des Fahrzeugs elektrisch übertragen. Insbesondere ist bevorzugt, dass das Fahrzeug oder zumindest einige seiner Komponenten per X-by-Wire-Steuerung (beispielsweise Drive-by-Wire, Shift-by-Wire (Schaltung), Brake-by-Wire (Bremssteuerung), Elektronisches Gaspedal (E-Gaspedal) und/oder Steer-by-Wire (Lenkung) gesteuert wird. Dabei wird bevorzugt an der Mensch-Maschine-Schnittstelle eine Eingabe eines Signals zur Steuerung des Fahrzeugs gegeben. Bei einer Mensch-Maschine-Schnittstelle kann es sich beispielsweise um einen Joystick, ein Touch-pad, eine berührungssensitive Fläche, ein berührungssensitiver Bildschirm, einen Wippschalter, ein Pedal, ein Drehregler und/oder andere handeln.

Durch eine solche Verfahrensführung ist es möglich, dass der Fahrer einzelne Steuerungen selbst übernehmen kann und das Assistenzsystem des Fahrzeugs die übrigen Steuerungen zur sicheren Führung des Fahrzeugs übernimmt. Insbesondere ist bei einer solchen Verfahrensführung möglich, dass - falls das Assistenzsystem erkennt, dass eine Eingabe des Fahrers das Fahrzeug in einen kritischen Fahrzustand versetzen würde - dieses Eingabesignal nicht unmittelbar an einen zugeordneten Aktuator weitergeleitet wird, sondern das Signal vor der Übermittlung an einen Aktuator derart modifiziert wird, dass das Fahrzeug bei Ausführung der dem modifizierten Signal zugeordneten Aktion durch den Aktuator in einem stabilen Fahrzustand verbleibt.

Durch ein wie oben beschriebenen Verfahren ist es weiterhin möglich, dass der Fahrer hierdurch eine Verbesserung der Fahrzeugführung gegenüber der Fahrweise erlebt, die aus einer unmittelbaren Umsetzung seiner Steuersignale resultieren würde. Dabei ist diese Verbesserung der Fahrzeugführung möglich, ohne dass der Fahrer sein eigenes Verhalten und/oder seine Fahrweise anpassen muss. Durch die Auswahl eines bestimmten Fahrmodus kann die Art der Verbesserung abhängig von dem gewünschten Ziel der Verbesserung angepasst werden. So ist beispielsweise denkbar, durch ein solches Verfahren der Fahrkomfort, die Energieeffizienz, die erlebte Sportlichkeit, die Sicherheit, das Verhalten in (für den Fahrer) unbekannten oder überfordernden Situationen und/oder anderen Situationen gegenüber den Bedingungen, wie sie bei einer unmittelbaren Umsetzung der Steuersignale des Fahrers auftreten würden, verbessert wird.

Erfindungsgemäß umfasst eine Mensch-Maschine-Schnittstelle einen optischen und/oder akustischen Signalgeber. Dieser Signalgeber ist als ein Anzeigeelement ausgestaltet, durch welches dem Fahrer eine Information zu einer Abweichung von der durch das Assistenzsystem erwarteten Fahrereingabe und der tatsächlich getätigten Eingabe dargestellt wird. So wäre beispielsweise denkbar, dass dem Fahrer einerseits eine Trajektorie angezeigt wird, auf welchem sich das Fahrzeug bei dem tatsächlichen Lenkbefehl bewegen würde, andererseits aber auch ein Zielkorridor, innerhalb dessen sich das Fahrzeug nach Vorausberechnung des Assistenzsystems bewegen sollte. Auch akustische und/oder haptische Signale könnten den Fahrer beispielsweise auf das Verlasen eines solchen Korridors hinweisen.

Im Zusammenhang mit der zunehmenden Verfügbarkeit und Nutzung (teil-) autonom fahrbarer Fahrzeuge ist zu erwarten, dass der Anteil der Fahrstrecken, auf denen ein Fahrzeug (allein) von einem Menschen gesteuert wird, sinkt. Dementsprechend wird auch die Fahrerfahrung der Menschen abnehmen. Es ist daher zu erwarten, dass es häufiger zu Situationen kommen wird, in denen ein Fahrer durch ein ungeeignetes Steuersignal das von ihm (gegebenenfalls Assistenzsystem gestützt) geführte Fahrzeug in einen kritischen Fahrzustand bringen wird. Das oben beschriebene Verfahren ist dazu geeignet, einen solchen kritischen Fahrzustand zu vermeiden. Dennoch kann es vorteilhaft sein, dem Fahrer eine Rückmeldung dazu zu geben, dass das von ihm eingegebene Steuersignal durch das Assistenzsystem nicht unmittelbar sondern modifiziert oder sogar gar nicht umgesetzt wurde. Vorzugsweise kann bei einem Fahrer durch eine solche Rückmeldung ein Lerneffekt ausgelöst werden, so dass in Zukunft derartige, zu potentiell kritischen Fahrsituationen führende Aktionen, vermieden werden können.

Vorzugsweise wird dem Fahrer daher eine Rückmeldung über eine Abweichung seiner durch die Mensch-Maschine-Schnittstelle erfassten Fahranweisung von einer (durch das Assistenzsystem beziehungsweise einer seiner Komponenten) erwarteten Eingabe zur Bewegung des Fahrzeugs auf dem vorherberechneten Fahrweg gegeben wird. Dadurch kann der Fahrer darauf aufmerksam gemacht werden, dass seine Eingabe durch das Assistenzsystem verändert werden musste, um das Fahrzeug in einem stabilen Zustand zu halten.

Diese Verfahrensvariante ist jedoch nicht auf das Vermeiden kritischer Fahrzustände beschränkt. Vielmehr können durch eine solche Verfahrensführung auch Rückmeldungen zu anderen Fahrsituationen an den Fahrer gegeben werden, die als günstiger eingestuft werden.

So kann beispielsweise in Abhängigkeit einer Vorauswahl des Fahrers eine Rückmeldung dann erfolgen, wenn in einer bestimmten Situation eine energiesparender Fahrweise möglich gewesen wäre. Ebenso wäre situationsabhängig auch eine Rückmeldung zu einer Möglichkeit einer (quer-) beschleunigungsärmeren Fahrweise (beispielsweise beim Personentransport) oder einer besonders sicheren Fahrweise mit vergrößerten Sicherheitsreserven (beispielsweise beim Personentransport oder Gefahrguttransport) denkbar. Dementsprechend ist ein Training auf eine vorauswählbare Fahrweise möglich. Anwendung finden kann ein solches Verfahren auch im Motorsport, beispielsweise um einem Fahrer die Möglichkeit einer Fahrzeugführung zur schnelleren (Kurven-) Fahrt aufzuzeigen.

Vorzugsweise wird ein zu der Rückmeldung korrelierendes Datum in einer Datenbank gespeichert. Aus einer Vielzahl derartiger Daten lässt sich beispielsweise ermitteln, ob bestimmte Eingaben des Fahrers, die potentiell zu kritischen Fahrsituationen führen würden, widerholt gegeben werden. Aus diesen Daten lassen sich gegebenenfalls Rückschlüsse auf bevorzugte Fahrmodi des Fahrers und/oder bevorzugte Fahrcharakteristika schließen. Unabhängig davon ermöglicht das Speichern derartiger Datensätze einen Lern- und/oder Trainingseffekt des Fahrers basierend auf einer Vielzahl von zu Rückmeldungen korrelierenden Daten zu erfassen und/oder dokumentieren zu können. Diese Daten könnten beispielsweise für das Versicherungswesen von Bedeutung sein. In der oben beschriebenen Anwendung im Motorsport kann der Trainingsfortschritt eines Fahrers erfasst und gegebenenfalls das Training gezielt ausgerichtet werden.

Vorzugsweise wird (durch den Fahrer oder eine andere autorisierte Person oder Stelle) der kritische Korrelationsgrenzwert festgelegt. Dieser kritische Korrelationsgrenzwert kann einen Grad der Entkopplung zwischen dem Steuerbefehl des Fahrers und dem durch das Fahrzeug (oder einen oder mehreren dessen Aktuatoren) darstellen. Vorzugsweise kann dieser kritische Korrelationsgrenzwert für einzelne und/oder Steuersignalgebergruppen separat festgelegt werden. Durch eine solche Festlegung des kritischen Korrelationsgrenzwerts kann beispielsweise vorbestimmt werden, ab welcher Abweichung zwischen der durch den Fahrer gegebenen Fahranweisung und dem vorausberechneten Fahrweg des Fahrzeugs und/oder des vorausberechneten Fahrzeugzustands die unmittelbare Umsetzung der fahrerseitigen Fahranweisung nicht mehr erfolgt. Wird der kritische Korrelationsgrenzwert beispielsweise für eine Gaspedalbetätigung (Beschleunigung) niedriger angesetzt als ein kritischer Korrelationsgrenzwert für eine Betätigung einer Bremse, erfolgt ein systemseitiger Eingriff bei Ausbleiben eines Bremsbefehls sehr früh, wohingegen das System erst bei sehr großen Abweichungen einer Gaspedalbetätigung von einem erwarteten (und zu einem sicheren Fahrzeugzustand führenden) Beschleunigungssignal eine Modifikation dieses Eingangssignals vornehmen wird.

Vorzugsweise werden basierend auf Daten einer Vielzahl von Fahrten eines Fahrers unvorteilhafte Fahrmuster und/oder unvorteilhaften Fahrcharakteristika erkannt. Die zugrundeliegenden Daten sind bevorzugt charakteristisch für mindestens ein Merkmal ausgewählt aus einer Gruppe, die eine Fahreridentifizierung, eine Fahrzeuginsassenidentifizierung, eine Fahrzeugidentifizierung, bisherige Unterschreitungen eines kritischen Korrelationswertes durch den aktuellen Fahrer und eine Zuordnung einer vorherigen Unterschreitungen eines kritischen Korrelationswertes zu einem Steuersignal oder einer Steuersignalgruppe umfasst. Dadurch ist es beispielsweise möglich, dass für einen bestimmten Fahrer häufig Unterschreitungen eines kritischen Korrelationswertes erkannt werden, die mit einem zu späten Auslösen eines Bremsvorgangs und somit einem unvorteilhafte Fahrmuster und/oder unvorteilhaften Fahrcharakteristika korrelieren. Der Fahrer könnte (beispielsweise in regelmäßigen Abständen) darüber informiert werden, um ihn zu einer verbesserten Fahrweise anzuleiten. Außerdem könnten diese Daten herangezogen werden, um zukünftige Eingaben des Fahrers vorherzusagen.

Vorzugsweise überwacht und/oder erkennt mindestens ein Sensor den Fahrer und/oder einen Fahrzeuginsassen. Dadurch ist es möglich, dass ein Steuersignal genau diesem Fahrer und/oder Fahrzeuginsassen zugeordnet wird. Eine Überwachung und Identifizierung der Insassen kann vorteilhaft und/oder notwendig sein, falls ein Insasse die Steuerung des Fahrzeugs übernimmt und erst während der Fahrt in die Fahrzeugsteuerung eingreift. Außerdem oder ergänzend dazu könnte die Anwesenheit bestimmter Fahrzeuginsassen, beispielsweise Babys oder Kleinkinder, eine Vorauswahl einer anderen, beispielsweise (quer-) beschleunigungsarmen Fahrcharakteristik auslösen. Ebenso ist in diesem Fall dankbar, dass Steuersignale genau dieser Fahrzeuginsassen nicht als Steuersignale interpretiert werden (beziehungsweise jede Abweichung einer von einem Baby oder Kleinkind gegebene Fahranweisung von einer zu dem vorausberechneten Fahrweg des Fahrzeugs und/oder des vorausberechneten Fahrzeugzustands korrelierenden Fahranweisung als Unterschreitung des kritischen Korrelationsgrenzwerts interpretiert wird).

In einer bevorzugten Variante des Verfahrens wird durch das Assistenzsystem ein virtueller dreidimensionaler Raum aufgespannt, dessen Dimensionen
- ein Grad der Entkopplung einer Fahrereingabe an der Mensch-Maschine-Schnittstelle von einem korrespondierenden Aktuatorsignal,
- ein Grad der Manipulation des vom Fahrer gegebenen Steuersignals in eine Ansteuerung eines korrespondierenden Aktuators, und
- eine Intensität einer Rückmeldung an den Fahrer sind.

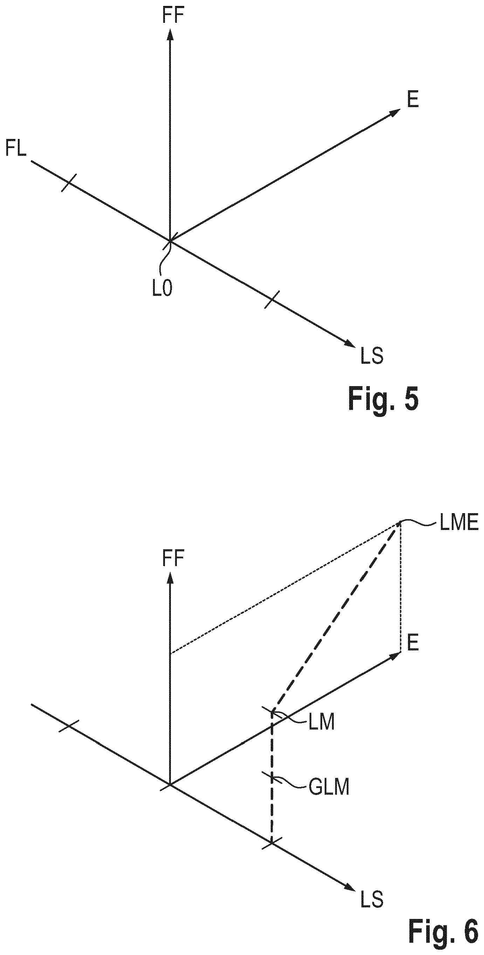

Vorzugsweise wird durch das Assistenzsystem jedem Fahrer mindestens ein Punkt in diesem virtuellen Raum zugeordnet. Dieser Punkt korreliert zu einem für diesen Fahrer geeigneten und/oder von diesem Fahre als angenehm empfundenen Steuer- und/oder Rückmeldeverhalten des Assistenzsystems. Die Möglichkeiten, die sich einer solchen Zuordnung ergeben, sind für eine beispielhafte Verfahrensführung insbesondere im Zusammenhang mit den Figuren 5 und 6 dargestellt, gelten jedoch allgemein im Rahmen dieser Erfindung.

Vorzugsweise wird der einem Fahrer zugewiesene Punkt in Abhängigkeit der Fahrsituation entlang einer vorzugsweise stetigen Kurve in dem oben beschriebenen dreidimensionalen Raum verschoben. Dadurch ist es möglich, dem Fahrer beispielsweise bei Langstreckenfahrten ein anderes Fahrgefühl zu vermitteln als bei gemächlicher Fahrt (beispielsweise im Stadtverkehr) oder langsamer Fahrt (beispielsweise beim Rangieren). Es ist somit denkbar, dass jedem Fahrer eine Kurve in diesem dreidimensionalen Raum zugeordnet wird und der oben erwähnte Punkt, der vorzugsweise die Korrelation zwischen der Mensch-Maschine-Schnittstelle und einem durch diese Mensch-Maschine-Schnittstelle ansteuerbaren Aktuator definiert, in Abhängigkeit der Fahrsituation auf dieser Kurve angeordnet wird. Durch eine solche systematische und gemeinsame Ausnutzung der oben genannten Freiheitsgrade ist es möglich, dem Fahrer ein angenehmes Steuer-, beispielsweise Lenkgefühl zu vermitteln, welches die (gegebenenfalls starken) Eingriffe des Assistenzsystems verschleiert. Dennoch bekommt der Fahrer eine Rückmeldung (Feedback) zu seiner Aktion und ein gewünschtes (beispielsweise sehr direktes) Steuergefühl.

Ein wie oben beschriebener Punkt in diesem dreidimensionalen Raum und/oder eine darin angeordnete Kurve kann beispielsweise individuell für jeden Fahrer angelegt, durch das Assistenzsystem bestimmt (beispielsweise aus historischen Fahrdaten dieses Fahrers) und/oder werksseitig für eine bestimmte Fahrergruppe vorgegeben sein. Gegebenenfalls kann die Positionierung des Punktes und/oder der Verlauf der Kurve durch den Fahrer verändert werden. Dazu ist vorzugsweise vorgesehen, dass durch das Assistenzsystem Charakteristika eines Fahrers erkannt werden und die Kurve entsprechend dieser Charakteristika angepasst wird. Korrelieren die Eingaben des Fahrers beispielsweise zu einer ehr sportlichen Fahrweise, könnte der Grad der Entkopplung erhöht werden und dem Fahrer durch verstärktes Feedback und die Simulation eines direkteren / unmittelbareren Eingriffs in die Fahrweise eine noch sportlichere Fahrweise simuliert werden als sie durch das Fahrzeug tatsächlich durchgeführt wird.

Ein anderes Beispiel für eine Verschiebung des Punktes oder der Kurve kann beispielsweise dann gegeben sein, wenn das Assistenzsystem zum Training eines Fahrers genutzt wird und sich eine positiver Trainingseffekt einstellt. In einem solchen Fall kann der Grad der Entkopplung reduziert werden und dem Fahrer damit mehr Möglichkeiten zur Individualisierung des (tatsächlichen) Fahrverhaltens des Fahrzeugs eingeräumt werden.

Vorzugsweise erfolgt die Ausführung des Verfahrens, also mindestens eines Verfahrensschritts unter Verwendung eines, insbesondere trainierbaren, Modells maschinellen Lernens. Dabei umfasst das Modell bevorzugt einen Satz, insbesondere trainierbarer, Parameter, welche auf Werte eingestellt sind, die als Ergebnis eines Trainingsprozesses gelernt wurden.

Mindestens eine Rechnereinrichtung steht vorzugsweise zumindest temporär mit einem Datennetz in Verbindung. Dadurch kann ermöglicht werden, dass das Computersystem beziehungsweise die Rechnereinrichtung Updates erhält und so beispielsweise zur Erkennung neuer Gefahren angelernt werden kann oder ein Algorithmus zur Berechnung eines (beispielsweise aus einer Unterschreitung eines kritischen Korrelationsgrenzwerts resultierenden) Gefahrenrisikos verbessert, also genauer wird. Das Datennetz kann eine Rechnereinrichtung mit einem System künstlicher Intelligenz umfassen, welche Daten einer Vielzahl von Rechnereinrichtungen (insbesondere verschiedener Fahrzeuge) erhält und aus diesen Daten und bei einzelnen Fahrzeugen tatsächlich auftretenden und tatsächlich nicht auftretenden Gefahrensituationen verbesserte Algorithmen zur Berechnung eine Gefahrenrisikos erzeugt.

Bevorzugt ist das Modell maschinellen Lernens zur Ausführung eines (computerimplementierten) Computer- Verfahrens geeignet und bestimmt, in welchem (computer-implementierte) Wahrnehmungs- und/oder Erfassungsaufgaben ausgeführt werden, beispielsweise (computer-implementierte) Verfahren zur semantischen Segmentierung und/oder (computer-implementierte) Objektklassifizierung. Dabei wird bei der Objektklassifizierung ein in den Messwerten (oder in den für die Messwerte charakteristischen Sensordaten) erfasstes und/oder dargestelltes Signal einer (vorher eingelernten und/oder vorgegebenen) Klasse zugeordnet. Bei den Klassen kann es sich (unter anderem) um eine Bedeutung (insbesondere in Bezug auf eine Fahranweisung oder einen veränderten Fahrweg) eines erfassten Signals und/oder eine für eine Bedeutung des erfassten Signals charakteristische Benachrichtigungsgröße handeln.

Bevorzugt basiert das Modell maschinellen Lernens auf einem (künstlichen) neuronalen Netzwerk (KI - Künstliche Intelligenz). Bevorzugt werden dem künstlichen neuronalen Netzwerk die Sensordaten (oder hiervon abgeleitete Daten) als Eingangsgrößen zugeführt. Bevorzugt bildet das künstliche neuronale Netzwerk die Eingangsgrößen in Abhängigkeit einer (durch die trainierbaren bzw. trainierten Parameter) parametrierbaren bzw. parametrierten Verarbeitungskette auf Ausgangsgrößen ab.

Ein solches neuronales Netzwerk kann beispielsweise als tiefes neuronales Netzwerk (Deep Neural Network, DNN), bei dem die parametrierbare Verarbeitungskette eine Mehrzahl von Verarbeitungsschichten aufweist, und/oder ein sogenanntes Convolutional Neural Network (CNN) (dt. Faltungsnetzwerk) und/oder ein rekurrentes Neuronales Netzwerk (RNN, engl. Recurrent Neural Network) ausgestaltet sein. Bevorzugt wird durch das Training die parametrierbare Verarbeitungskette parametriert. Bevorzugt werden als Trainingsdaten Datensätze in Bezug auf obig beschriebene (Basis-)Datensätze und/oder Trainings-Datensätze verwendet. Bevorzugt erfolgt das Training mittels überwachtem Lernen. Es wäre jedoch auch möglich, das Künstliche Neuronale Netz mittels unbeaufsichtigtem Lernen, bestärkendem Lernen oder stochastischem Lernen zu trainieren.

Die vorliegende Erfindung ist weiterhin gerichtet auf ein Assistenzsystem gemäß Anspruch 10.

Eine solches Assistenzsystem weist vorzugsweise alle notwendigen Komponenten auf, um das oben beschriebene Verfahren durchzuführen. Sie ist insbesondere dazu eingerichtet, geeignet und/oder bestimmt, das obig beschriebene Verfahren sowie einzelne oder alle bereits obig im Zusammenhang mit dem Verfahren beschriebene Verfahrensschritte einzeln oder in Kombination miteinander auszuführen. Umgekehrt kann das Verfahren mit allen im Rahmen des Assistenzsystem beschriebenen Merkmalen einzeln oder in Kombination miteinander ausgeführt werden.

Wie oben bereits bezüglich des Verfahrens beschrieben wurde, ermöglich ein solches Assistenzsystem auch bei Steuersignalen eines Fahrers, die potentiell zu einer kritischen Fahrsituation führen könnten, das Fahrzeug sicher zu dem gewählten Ziel zu führen.

Als "zweiter Fahrweg" soll im Zusammenhang mit der vorliegenden Erfindung ein Fahrweg verstanden werden, der zu dem selben Fahrziel führt wie der erste Fahrweg. Dieses Fahrziel muss vorzugsweise nicht das Endziel einer Fahrt sein, sondern kann eventuell auch ein Zwischenziel sein. Der zweite Fahrweg muss sich nicht zwangsläufig in seiner geometrischen Ausgestaltung vom ersten Fahrweg unterscheiden. Es wäre auch denkbar, dass er in seiner Form identisch zu dem ersten Fahrweg ist. Er unterscheidet sich jedoch vorzugsweise in mindestens eine Merkmal von dem ersten Fahrweg. Dieses Merkmal kann eine Kenngröße des Fahrzeugs sein, welches sich auf diesem Fahrweg bewegt (beziehungsweise zukünftig bewegen soll). Diese Kenngröße könnte beispielsweise eine Geschwindigkeit, ein Abstand zu einem Hindernis, ein Lenkeinschlag, eine andere Fahrzeugposition und/oder -ausrichtung und/oder andere sein.

Vorzugsweise umfasst die Mensch-Maschine-Schnittstelle des Assistenzsystems eine Rückmeldeeinrichtung, mittels welcher einem Fahrer ein Ergebnis der Korrelationswertermittlung durch die Korrelationswertermittlungseinrichtung übermittelbar ist. Dadurch ist es möglich dem Fahrer mitzuteilen, wann seine Eingabe an der Mensch-Maschine-Schnittstelle von einer Eingabe abweicht, die zum Bewegen des vorberechneten Fahrwegs an dieser Mensch-Maschine-Schnittstelle erwartet wurde.

Die Ausgabe der Rückmeldung kann jedoch auch an einem von dem Ort der Eingabe des Steuersignals abweichenden Ort ausgegeben werden. Bei diesem Ort kann es sich beispielsweise um eine Anzeigeeinrichtung handeln. An dieser könnte dem Fahrer eine Information über dessen Eingabe und - falls diese von der erwarteten Eingabe abweicht - zu dieser Abweichung gegeben werden. Es wäre jedoch auch denkbar, den Fahrer bereits frühzeitig über eine zukünftig erwartete Eingabe zu informieren. So könnte dem Fahrer beispielsweise auf einer Anzeigeeinrichtung eine Ansicht eines zukünftigen Streckenabschnitts eingeblendet werden. Dieser Streckenabschnitt kann mit Informationen zu an bestimmten Punkten dieses Streckenabschnitts erwarteten (Fahrer-) Eingaben gekennzeichnet sein. Treten dann Abweichungen von diesen erwarteten Eingaben auf, kann das Assistenzsystem daraus eine Intention des Fahrers ableiten, dass er ein anderes Fahrerlebnis wünscht, und/oder das Assistenzsystem könnte den Fahrer auf diese Abweichung aufmerksam machen, um einen Trainingseffekt auszulösen und zukünftig verbesserte Fahrereingaben zu provozieren.

Vorzugsweise korreliert eine Stärke eines Rückmeldesignals der Rückmeldeeinrichtung zu einem Betrag, um den der Korrelationsgrenzwert unterschritten ist. So kann der Fahrer erfahren, ob seine Eingabe stark oder nur wenig von dem erwarteten Eingabesignal abgewichen ist. Vorzugsweise ist ein Verhältnis der Stärke des Rückmeldesignals zu dem Betrag der Unterschreitung durch den Fahrer vorgebbar ist. Durch die Möglichkeit der Einstellung eines solchen Verhältnisses kann erreicht werden, dass ein Fahrer nicht, nicht übermäßig, oft oder immer über Abweichungen seiner Eingabe von dem erwarteten Eingabesignal informiert wird. Insbesondere bei unerfahrenen Fahrern kann durch eine Wahl eines geeigneten Verhältnisses eine Informationsüberflutung vermeiden werden.

Vorzugsweise ist die Mensch-Maschine-Schnittstelle elektrisch mit einem Aktuator zur Steuerung des Fahrzeugs in Verbindung. Dies ermöglicht, dass Komponenten des Assistenzsystems ein von der Mensch-Maschine-Schnittstelle über diese Verbindung gegebenes Signal erkannt, ausgewertet und gegebenenfalls derart modifiziert wird, dass zu einer veränderten Ansteuerung des Aktuators korreliert. In einer bevorzugten Ausführungsform ist die Mensch-Maschine-Schnittstelle Teil einer X-by-Wire-Steuerung des Fahrzeugs, insbesondere Drive-by-Wire, Shift-by-Wire, Brake-by-Wire, elektronisches Gaspedal (E-Gaspedal) und/oder Steer-by-Wire.

Vorzugsweise besteht zwischen der zweiten Rechnereinrichtung und einer Datenbank eine Datenverbindung. In der Datenbank sind vorzugsweise Daten zu Fahrcharakteristika eines Fahrers, mehrerer Fahrer, einer Fahrergruppe und/oder verschiedenen Fahrmodi abgelegt sind. Dadurch ist es möglich, das von der zweiten Rechnereinrichtung erzeugte oder modifizierte Steuersignal auf bestimmte Fahrcharakteristika eines Fahrers, mehrerer Fahrer, einer Fahrergruppe und/oder verschiedenen Fahrmodi anzupassen. Vorzugsweise korreliert mindestens einer der in der Datenbank abgelegten Datensätze mit einem Fahrmodus, der ausgewählt ist aus einer Gruppe, die einen Komfortfahrmodus, einen Energiesparmodus, einen Sportmodus, einen Schnellstraßenmodus, einen Stadtverkehrsmodus, einen Langstreckenmodus, einen Arbeitsmodus, einen Trainingsmodus, einen Personentransportmodus, eine Warentransportmodus und einen Gefahrguttransportmodus umfasst. So kann beispielsweise durch den Fahrer oder eine andere autorisierte Person oder Stelle (beispielsweise dem Assistenzsystem selbst) ein Fahrmodus ausgewählt werden, der zu dem Fahrer passt oder der wahrscheinlich dem gewünschten Fahrprofil am nächsten kommt.

Vorzugsweise ist mindestens eine der Einrichtungen, vorzugsweise mehrere der Einrichtungen insbesondere bevorzugt jede der Einrichtungen aus einer Gruppe, die die erste Rechnereinrichtung, die Korrelationswertermittlungseinrichtung und die zweite Rechnereinrichtung umfasst, eine computerimplementierte Einrichtung. In einer besonders bevorzugten Ausgestaltung sind mehrere dieser Einrichtungen auf einem gemeinsamen Rechnersystem implementiert. Ein solches hat sich als besonders Raumsparend und aufgrund der verkürzten (Daten-) Übertragungswege als besonders schnell erwiesen.

Vorzugsweise umfasst die Korrelationswertermittlungseinrichtung und/oder die zweite Rechnereinrichtung ein System künstlicher Intelligenz oder mit einem solchen System zumindest zeitweise in Datenverbindung steht. Dabei ist vorzugsweise die Korrelationswertermittlungseinrichtung und/oder die zweite Rechnereinrichtung zur Erkennung eines Musters in der Abweichung der Korrelation zwischen der Fahranweisung des Fahrers und der erwarteten Fahranweisung des Fahrers zum Folgen des Vorausberechnungen eines Fahrwegs vorgesehen und eingerichtet. Dieses Muster vorzugsweise in einer Datenbank gespeichert, welche eine Grundlage für zukünftige Berechnungen eines Fahrwegs des Fahrzeugs bildet. Somit können von einem Fahrer erhaltene Steuersignale herangezogen werden, um dessen gewünschte Fahrweise und/oder dessen Fahrcharakteristik zu erkennen und auf Basis diese Daten zukünftig Fahrwege zu berechnen, die der gewünschten Fahrweise und/oder der Fahrcharakteristik eines Fahrers näher liegen.

Die vorliegende Erfindung ist weiterhin gerichtet auf ein Fahrzeug, insbesondere Kraftfahrzeug, umfassend ein obig beschriebenes Assistenzsystem. Bei dem Fahrzeug kann es sich insbesondere um ein (motorisiertes) Straßenfahrzeug handeln.

Bei einem Fahrzeug kann es sich um ein Kraftfahrzeug handeln, welches insbesondere ein halbautonomes, autonomes (beispielsweise der Autonomiestufe Level 2+, 3 oder 4 oder 5 (der Norm SAE J3016)) oder selbstfahrendes Kraftfahrzeug ist. Die Autonomiestufe Level 5 bezeichnet dabei vollautomatisch fahrende Fahrzeuge. Das Fahrzeug kann von einem Fahrer gesteuert werden oder autonom fahren. Darüber hinaus kann es sich bei dem Fahrzeug neben einem Straßenfahrzeug auch um ein Flugtaxi, ein Flugzeug und ein anderes Fortbewegungsmittel oder eine andere Fahrzeugart handeln, beispielsweise ein Luft-, Wasser- oder Schienenfahrzeug.

Weitere Vorteile und Ausführungsformen ergeben sich aus den beigefügten Zeichnungen:
Darin zeigen:
- Fig. 1: eine schematische Darstellung eines Teils des vorgeschlagenen Verfahrens gemäß einer Ausführungsform;
- Fig. 2: eine schematische Darstellung eines Teils des vorgeschlagenen Verfahrens gemäß einer Ausführungsform;
- Fig. 3: eine exemplarische Darstellung zur Entkopplung zwischen Mensch-Maschine-Schnittstelle und Aktuator;
- Fig. 4: eine weitere exemplarische Darstellung zur Entkopplung zwischen Mensch-Maschine-Schnittstelle und Aktuator;
- Fig. 5: eine Darstellung eines virtuellen Raums, der durch die möglichen Freiheitsgrade der Entkopplung zwischen Mensch-Maschine-Schnittstelle und Aktuator sowie der Rückmeldung aufgespannt wird;
- Fig. 6: eine beispielhafte Anordnung eines Rückkopplungsprofils in dem virtuellen Raum;
- Fig. 7: eine schematische Darstellung zur Wirkung des Assistenzsystems;
- Fig. 8: eine schematische Darstellung ausgewählter Fahrmodi;
- Fig. 9: eine weitere schematische Darstellung eines Teils des vorgeschlagenen Verfahrens gemäß einer Ausführungsform;
- Fig. 10: eine schematische Darstellung einer Fahrt eines Fahrzeugs unter Anwendung einer Verfahrensvariante;
- Fig. 11: eine weitere schematische Darstellung einer Fahrt eines Fahrzeugs unter Anwendung einer Verfahrensvariante; und
- Fig. 12: eine weitere schematische Darstellung einer Fahrt eines Fahrzeugs unter Anwendung einer Verfahrensvariante.

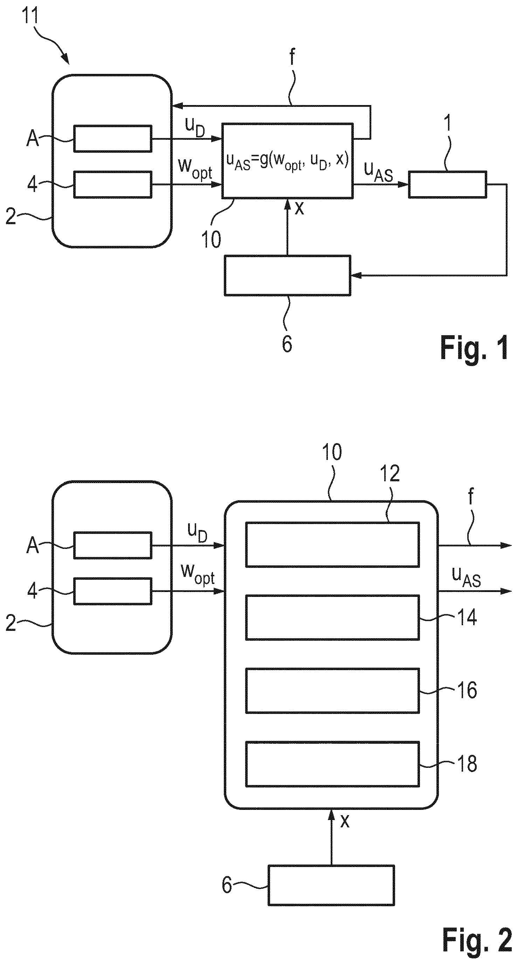

Fig. 1 eine schematische Darstellung eines Teils des vorgeschlagenen Verfahrens gemäß einer Ausführungsform. Das System 11 umfasst einen mit Bezugszeichen 2 kennzeichneten Fahrer 2, das Assistenzsystem 10, auf welchem zumindest Teile des Verfahrens durchgeführt werden und das Fahrzeug 1 und dessen Aktuatoren, welche Steuersignale des Assistenzsystem 10 umsetzen.

Der Fahrer 2 führt eine mit Bezugszeichen A gekennzeichnete Aktion aus. Diese Aktion korreliert zu einem Steuersignal u_{D} welches an das Assistenzsystem 10 übertragen wird. Das Steuersignal kann beispielsweise durch eine nicht separat dargestellte Mensch-Maschine-Schnittstelle basierend auf einer Eingabe (beziehungsweise der Aktion A) des Fahrers 2 erzeugt werden.

Außerdem erhält das Assistenzsystem 10 eine Information w_{Opt}, welche zu einem gewünschten Fahrerlebnis 4 des Fahrers 2 korreliert. Dieses Fahrerlebnis 4 wird auch als "optimales Fahrerlebnis" bezeichnet. Welches das gewünschte beziehungsweise optimale Fahrerlebnis für den Fahrer 2 ist, kann dieser beispielsweise durch eine Auswahl an das Assistenzsystem 10 übermitteln oder das Assistenzsystem 10 wählt nach einer Fahreridentifizierung selbständig ein vermutlich gewünschten Datensatz aus, welcher zu dem gewünschten beziehungsweise optimalen Fahrerlebnis korreliert.

Basierend auf Steuersignal u_{D} und der Information w_{Opt}, berechnet das Assistenzsystem 10, welches im Rahmen dieser Erfindung auch als "Driving Enhancing System" oder ebenfalls auch als "Advanced Driving Enhancement System" bezeichnet wird, ein verändertes Steuersignal u_{AS}. Dieses ist eine Funktion g basierend auf den Eingangsgrößen u_{D} und w_{Opt}, sowie weiteren Faktoren, die unter dem Zeichen "x" zusammengefasst sind. Als weitere Faktoren dienen insbesondere der (gegebenenfalls bereits berechnete) Fahrweg zu einem Ziel sowie Umgebungsfaktoren, wie Hindernisse, andere Verkehrsteilnehmer, Fahrbahnzustand, Streckenverlauf und andere.

Das veränderte Steuersignal u_{AS} wird dann an das Fahrzeug 1 beziehungsweise dessen Steuereinrichtung und/oder Aktuatoren übertragen. Das Fahrzeug wiederum ermittelt mittels mindestens einem, vorzugsweise mehrerer geeigneter (nicht dargestellter) Sensoren in Schritt 6 Informationen zum aktuellen Fahrzustand und/oder der Fahrsituation. Auch andere Faktoren wie Füllstand eines Energiespeichers, Besetzungszustand des Insassenraums, Beladungszustand eines Laderaums, ein Wetterdatum, ein Zustand der Reifen und andere können einbezogen werden. Das Ergebnis der Ermittlung dieser Faktoren (hier wie oben dargelegt unter dem Zeichen "x" zusammengefasst) wird an das Assistenzsystem übermittelt und dort wie oben beschrieben der Berechnung des veränderten Steuersignals u_{AS} zugrunde gelegt.

Falls der Fahrer 2 eine Rückmeldung (Feedback) f, beispielsweise über eine Abweichung seines gegebenen Steuersignals u_{AS} von dem veränderten Steuersignal u_{AS} wünscht, kann ihm dies über einen entsprechenden Rückmeldekanal f gegeben werden.

In Fig. 2 ist eine schematische Darstellung eines weiteren Teils des vorgeschlagenen Verfahrens gemäß einer Ausführungsform gezeigt, wobei der Fokus auf die durch das Assistenzsystem 10 durchgeführten Schritte gelegt ist. Wie in Fig. 1 dargestellt erhält das Assistenzsystem 10 das Steuersignal u_{D}, die Information w_{Opt} sowie die unter x zusammengefasten Daten und berechnet darauf basierend das veränderte Steuersignal u_{AS}. Das veränderte Steuersignal u_{AS}, sowie falls gewünscht das Rückmeldesignal f, werden wie oben beschrieben an das Fahrzeug beziehungsweise den Fahrer ausgegeben.

Dazu sind in einer Verfahrensvariante die mit Bezugszeichen 12 - 18 bezeichneten Schritte vorgesehen, die durch das Assistenzsystem 10 durchgeführt werden.

In Schritt 12 wird zunächst eine Prädiktion der Fahreraktion und/oder eine Interpretation des situativen Fahrerwunschs vorgenommen. Für eine Prädiktion der Fahreraktion könnten beispielsweise Daten herangezogen werden, die unter ähnlichen Umgebungsbedingungen aufgezeichnet wurden. Existiert ein solcher Datensatz, kann aus diesem ausgelesen werden, wie der Fahrer in der Vergangenheit in einer solchen Situation reagiert hat. Mit einer erhöhten Wahrscheinlichkeit wird er in der nun detektierten Situation ähnlich handeln.

Alternativ oder ergänzend dazu kann die Interpretation des situativen Fahrerwunschs erfolgen. Diese Interpretation kann beispielsweise derart erfolgen, dass aus einer Betätigung des Gaspedals geschlussfolgert wird, dass der Fahrer besonders schnell ein (Zwischen-) Ziel erreichen möchte oder besonders sportlich fahren möchte.

In dem optionalen Schritt 14 erfolgt gegebenenfalls eine Verbesserung der Prädiktion um das ausgewählte Optimierungsziel. Ist als Optimierungsziel beispielsweise eine komfortable Fahrt ausgewählt, wohingegen die Prädiktion auf Basis einer sportlichen Fahrweise erfolgte kann die Prädiktion entsprechend angepasst werden.

In Schritt 16 bestimmt das Assistenzsystem 10 einen Assistenzbedarf zur Verbesserung der Aktion A des Fahrers 2 zur Erreichung des optimalen Fahrerlebnisses 4. Wurde als optimales Fahrerlebnis 4 beispielsweise ein erhöhter Komfort identifiziert, sind starke Beschleunigungen und/oder starker Lenkeinschlag nicht zur Erreichung dieses Ziels notwendig oder sogar kontraproduktiv. In einem solchen Fall würde ein Assistenzbedarf festgestellt.

Außerdem wird in Schritt 18 geprüft, ob die Verkehrs- und Interaktionssicherheit gewährleistet ist. Eine Aktion 4 des Fahrers 2 wird nicht ausgeführt, falls daraus ein Fahrzeugzustand resultieren würde, der die Verkehrssicherheit gefährdet. Ebenfalls nicht ausgeführt wird eine Aktion 4 des Fahrers 2, die als nicht beabsichtigt identifiziert wird.

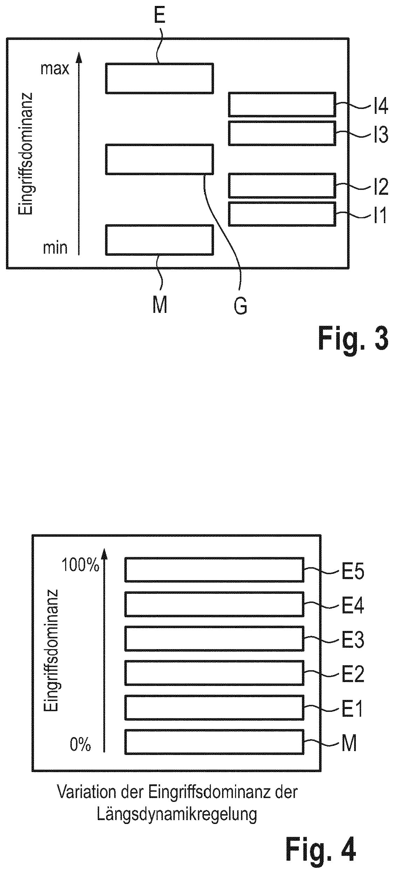

Fig. 3 zeigt eine exemplarische Darstellung der möglichen Entkopplung zwischen Mensch-Maschine-Schnittstelle und Aktuator. Eine solche Entkopplung ist insbesondere bei einer X-by-Wire Architektur möglich. Sie bietet viele Möglichkeiten, um den Fahrer zu unterstützen. Ebenfalls ist es möglich dem Fahrer eine Rückmeldung zu geben falls das Assistenzsystem von einem Steuerbefehl des Fahrers abweicht. Beispielsweise kann der Fahrer über spurführende Lenkmomente informiert werden. Ist ein Steer-by-Wire-System vorgesehen, kann zusätzlich auch die Verbindung zwischen Lenkrad und Vorderrad und/oder Gas- und/oder Bremspedal Längskraft auflösen und den Fahrer (teilweise) entkoppeln.

Die mögliche Fahrerunterstützung rangiert von geringfügig wahrnehmbaren Eingriffen bis zur vollständigen Entkopplung. Diese Variation der Eingriffsmöglichkeiten zwischen Mensch-Maschine-Schnittstelle und Aktuator ist als "Eingriffsdominanz" bezeichnet. Diese kann zwischen einem minimalen ("min") und einem maximalen ("max") Wert festgelegt werden. Dabei entspricht ein minimaler Wert einer manuellen Fahrt M ohne Eingriff durch ein Assistenzsystem. Maximale Eingriffsdominanz besteht dann, wenn eine Eingabe des Fahrers vollständig entkoppelt E ist von der Aktion, die das Fahrzeug tatsächlich ausführt. Zwischen diesen minimalen und maximalen Positionen befindet sich ein weiter Bereich, in dem ein Assistenzsystem die Fahrt beziehungsweise den Fahrer unterstützen eine solche Position ist mit dem Bezugszeichen G ("guided") gekennzeichnet.

Für den Grad der Entkopplung beziehungsweise die Eingriffsdominanz sind diverse Abstufungen denkbar. Im dargestellten Beispiel ist beispielsweise mit Bezugszeichen I1 eine geringe Unterstützung des Fahrers gekennzeichnet. Dies könnte beispielsweise durch eine audiovisuelle oder akustische Information, beispielsweise eine Warnleuchte oder ein Signalton erfolgen.

Die Eingriffsdominanz kann zudem in allen Unterstützungsmodalitäten anders umgesetzt und situativ abgestimmt sein. Diese Modalitäten sind beispielsweise Längsführung, Querführung, optische Informationen (durch Blinkleuchten, Head up display oder weiteres) als auch akustische Informationen. Insbesondere aber für die Modalität der Querführung ist eine weitere Aufteilung der Interaktion über die Mensch-Maschine-Schnittstelle vorteilhaft. Nachfolgend werden diese Modalitäten aber wieder auf eine zusammenfassende Betrachtung vereinfacht.

Eine weitergehende Unterstützung kann beispielsweise an Punkt I2 angeboten werden. Diese könnte beispielsweise direkt am Ort erfolgen, an dem eine entsprechende Reaktion des Fahrers erwartet wird. Beispielsweise könnte es sich um eine haptische Information des Eingabegeräts handeln, wie beispielsweise eine Vibration des Lenkrads bei der Gefahr des Verlassens der vorgesehenen Fahrbahn.

I3 steht für eine weitergehende Entkopplung. Bei einer solchen Entkopplung übernimmt das Fahrzeug selbständig die Kontrolle über bestimmte Funktionen. Der Fahrer braucht das dieser Funktion zugeordnete Eingabegerät nicht mehr zu kontrollieren. Ein Beispiel für einen solchen Entkopplungsgrad ist die aktive Fahrzeugführung, beispielsweise durch spurführende Lenkmomente (eines Spurhalteassistenten). In einem solchen Fall ist es aber dem Fahrer jederzeit möglich, die Kontrolle über diese Funktion zu erlangen und durch einen Eingriff beispielsweise einen Spurwechsel des Fahrzeugs zu erzwingen.

Anders ist die Situation hingegen bei I4. In diesem Bereich des Entkopplungsgrads ist beispielsweise die Funktion eines Notbremsassistenten angeordnet. Diese führt eine Notbremsung nämlich entkoppelt von (zumindest einigen anderen) Aktionen des Fahrers aus. Beispielsweise eine Beschleunigung des Fahrzeugs wir dem Fahrer bei ausgelöstem Notbremsassistenten nämlich untersagt. Eine entsprechende Eingabe (beispielsweise am Gaspedal) würde nicht ausgeführt. Es liegt somit eine zumindest teilweise Entkopplung vor.

Fig. 4 zeigt eine weitere exemplarische Darstellung zur Entkopplung zwischen Mensch-Maschine-Schnittstelle und Aktuator am Beispiel der Variation der Eingriffsdominanz der Längsdynamikregelung. Bei 0 % Eingriffsdominanz M wird das Fahrzeug analog zu der in Fig. 3 dargestellten Situation bei minimaler Eingriffsdominanz M ausschließlich manuell gesteuert.

Bezugszeichen E1 steht hier für einen geringen Grad der Entkopplung bei dem beispielsweise audiovisuell oder akustisch auf eine anstehende Gefahr hingewiesen wird. Die Reaktion auf eine derartige Warnung muss jedoch vom Fahrer erfolgen. Beispielsweise durch manuelles betätigen der Bremse.

Ein erhöhter Grad der Entkopplung ist bei Bezugszeichen E2 gegeben. Einige Funktionen der Längsdynamikregelung sind hier entkoppelt und so nicht mehr für den Fahrer ausführbar. Denkbar ist beispielsweise, dass ein Signal zur Beschleunigung des Fahrzeugs (beispielsweise das Treten des Gaspedals) nicht oder nicht in vollem Umfang in eine Beschleunigung des Fahrzeugs umgesetzt wird.

Bei den mit Bezugszeichen E3, E4 und E5 bezeichneten Positionen erflogt eine weitergehende Entkopplung der Längsdynamikregelung durch Bremseingriff durch das Assistenzsystem. Dieser Bremseingriff kann verschieden abgestuft sein und ist bei E3 mit einem leichten Bremseingriff am geringsten und steigert sich über einen Ansteigenden Bremseingriff bei E4 bis zu einem vollständigen Bremseingriff durch das Assistenzsystem bei E5.

In Fig. 5 ist ein virtueller Raums dargestellt, der durch die möglichen Freiheitsgrade der Entkopplung zwischen Mensch-Maschine-Schnittstelle und Aktuator sowie der Rückmeldung aufgespannt wird. Ein solcher Raum wird insbesondere durch eine X-By-Wire-Architektur aufgespannt und bietet besonders viele Möglichkeiten, um den Fahrer zu unterstützen.

In diesem Raum spannt die Achse E einen Grad der Entkopplung auf, wie sie in den Figuren 3 und 4 dargestellt ist. Am Ursprung liegt keine Entkopplung vor und der Fahrer steuert manuell. Vollständige Entkopplung wird am Ende der Achse E erreicht. Dort übernimmt das Assistenzsystem die vollständige Kontrolle über die Steuerung des Fahrzeugs und mögliche Eingriffe des Fahrers in das Lenkrad haben keinerlei direkten Einfluss auf das Fahrgeschehen. Die Interpretation der Fahreraktionen durch das ADES bleibt aber vorzugsweise weiterhin bestehen, sodass es sich für den Fahrer weiterhin so anfühlen könnte, wie als hätte er direkte Kontrolle über das Fahrgeschehen.

Die sich zwischen den Punkten FL und LS erstreckende Achse steht für einen Grad der Manipulation des vom Fahrer gegebenen Steuersignals in eine Ansteuerung eines korrespondierenden Aktuators. Diese Achse steht für den Freiheitsgrad einer x-by-wire Architektur, dass das Feedback an den Nutzer nicht direkt mit den real aufs Fahrzeug wirkenden Reaktionen korrelieren muss. Durch eine solche Manipulation des Steuersignals kann einem identischem Steuersignal in Abhängigkeit von der Fahrsituation ein verschiedenes Aktuatorsignal zugeordnet sein.

Am Ursprung L0 erfährt der Fahrer beispielsweise an einem Lenkrad bei der Betätigung gar kein bekanntes Lenkgefühl, sondern das Lenkrad würde sich beinahe vollkommen Momentenfrei in eine vom Fahrer gewünschte Lenkposition drehen. Bewegt sich die Abstimmung in Richtung der Achse LS wird ein Lenkgefühl simuliert, welches zur aktuellen Fahrsituation korreliert, wobei die Stärke der Rückmeldung variiert werden kann, grob vergleichbar zur Veränderung einer Servolenkungsunterstützung. Es wäre jedoch denkbar, das Aktuatorsignal abhängig von der Fahrzeuggeschwindigkeit zu verändern, um so einem Fahrer das Rangieren bei niedrigen Geschwindigkeiten zu erleichtern. Diese Veränderung kann so weit gehen, dass der Fahrer ein fiktives Lenkgefühl FL wahrnimmt, welches in keinem Zusammenhang mit dem tatsächlich am Aktuator vorgenommenen Lenkeinschlag steht.

Ein anderes Extrem ist im Punkt LS gegeben, an dem der Fahrer ein Lenkgefühl erfährt, als würde jede seiner Eingaben unmittelbar auf die Aktuatoren und damit die Straße übertragen. Da bei einem Steer-by-Wire-System eine solche unmittelbare Übertragung jedoch nicht existiert ist es denkbar, dass dem Fahrer am Punk LS eine Simulation einer unmittelbaren Übertragung seiner Eingaben auf die Aktuatoren simuliert wird.

Die Achse FF kennzeichnet eine Richtung, in der eine Intensität einer Rückmeldung an den Fahrer ("Fahrerfeedback) zunimmt. Diese Rückmeldung ist unabhängig von der Manipulation des Steuersignals zu einem Aktuatorsignal. Allerdings kann ein Rückmeldesignal eine Steuersignal überlagern und andersrum. So ist beispielsweise eine Lenkradvibration beim Be- oder Überfahren einer Fahrbahnbegrenzung am Lenkrad spürbar und überlagert gegebenenfalls eine Kraft, die zum Einschlag des Lenkrads notwendig ist. Diese Achse ist vergleichbar zu den Eingriffsmöglichkeiten, wie sie Systeme ohne X-By-Wire Architektur ermöglichen, denen der Freiheitsgrad der Entkopplung oder Lenkgefühlsimulation nicht möglich ist.

Fig. 6 zeigt eine beispielhafte Anordnung eines Rückkopplungsprofils in dem virtuellen Raum, wie er in Fig. 5 dargestellt ist. Wir durch die lediglich beispielhaft dargestellte Kurve gezeigt ist, kann ein solches System jeden Punkt in dem durch die drei beschriebenen Freiheitsgrade aufgespannten Raum einnehmen. So kann beispielsweise einem Fahrer ausgehend von einer gewählten Korrespondenz zwischen Steuersignals und Aktuatorsignal auf der Achse LS eine Rückmeldung entlang der Achse FF gewählt werden. Beispielhaft sind Rückmeldesignale mit einem geringen Lenkmoment GLM und einem starken Lenkmoment LM dargestellt. Ein solches Lenkmoment als Rückmeldung an den Fahrer kann selbst dann gegeben werden, das Steuersignals vollständig vom Aktuatorsignal entkoppelt ist. Das heißt, dass selbst wenn das Assistenzsystem die vollständige Kontrolle über die Lenkung übernommen hat und damit ein Lenkradeinschlag nicht in eine Richtungsänderung umgesetzt würde, kann dem Fahrer eine Rückmeldung ein Aktuatorsignal durch Übertragung eines Lenkmoments bei vollständiger Entkopplung LME gegeben werden.

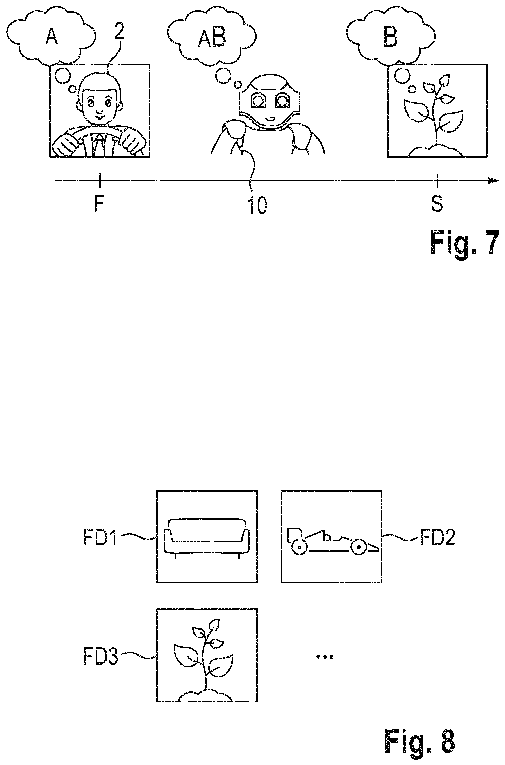

Fig. 7 zeigt schematische eine Darstellung zur Wirkung des Assistenzsystems 10. Das Assistenzsystems 10 ist in der Lage, eine Aktion A des Fahrers 2 zu erkennen. Diese Aktion 2 des Fahrers muss jedoch nicht die bestmögliche Aktion A sein, um ein vom Fahrer 2 gewünschtes Ziel zu erreichen. Es handelt sich somit lediglich um eine vom Fahrer subjektiv als geeignet angesehene Aktion.

Dem Assistenzsystem liegen auch Informationen diverser Sensoren und zum gewählten Fahrziel vor. Diese durch das System S ermittelten oder diesem vorliegenden "objektiven" Informationen B müssen ebenfalls berücksichtigt werden.

Das hier illustrativ dargestellte Assistenzsystem 10 muss daher den subjektiven Wunsch des Fahrers bestmöglich verstehen und so nachbilden, dass der Fahrer idealerweise nicht unterscheiden kann, ob die Fahrzustände auf Basis seiner direkten Aktionen oder auf Basis der indirekten Nachbildung seines subjektiven Fahrwunsches resultieren. Sobald das System in der Lage ist, diesen subjektiven Fahrwunsch (zumindest teilweise) Nachzubilden, wird es möglich, dass der subjektive Fahrwunsch in Richtung des "objektiven" Fahrziels B verbessert wird. Es ist daher eine Planungsadaption AB notwendig. Dadurch wird der "subjektive" Wunsch des Fahrers in Richtung eines "objektiven" Fahrziels verschoben.

Fig. 8 zeigt schematische eine Darstellung ausgewählter Fahrmodi FD1 - FD3, die auch ein "objektives" Fahrziels B sein können oder zur Berechnung eines "objektives" Fahrziels B herangezogen werden können. Lediglich beispielhaft sind durch die den Bezugszeichen FD1 - FD3 zugeordneten Grafiken Fahrmodi wie Komfort FD1, Sportlich FD2 und Ökologisch FD3 dargestellt.

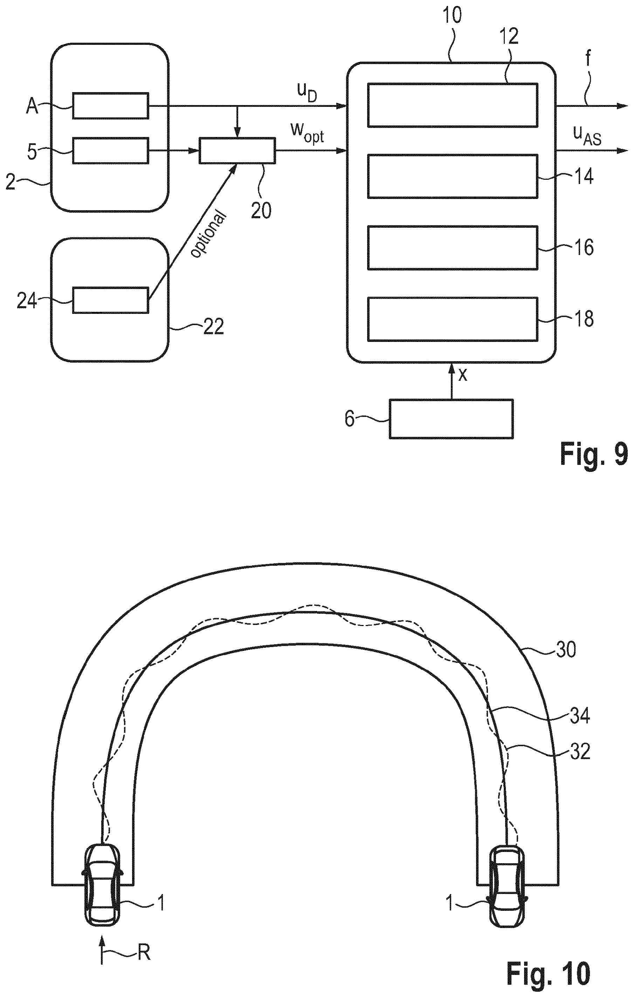

In Fig. 9 ist eine weitere schematische Darstellung einer Fahrt eines Fahrzeugs unter Anwendung einer Verfahrensvariante gezeigt. Diese Verfahren entspricht in Teilen dem in Fig. 2 dargestellten Verfahren, so dass lediglich diejenigen Verfahrensschritte im Detail beschrieben sind, die sich von dem in Fig. 2 dargestellten Verfahren unterscheiden.

Wesentlicher Unterschied gegenüber dem in Fig. 2 dargestellten Verfahren ist, dass das Eingangssignal w_{Opt}, welches durch das Assistenzsystem zur Berechnung des veränderten Steuersignal u_{AS} herangezogen wird, nicht allein auf dem vom Fahrer gewünschten Fahrverhalten basiert. Vielmehr ist gemäß dieser Verfahrensvariante vorgesehen, dass neben dem gewünschten Fahrerlebnis 4 des Fahrers 2 zur Berechnung des optimalen Fahrerlebnisses 20 und damit auch dem Eingangssignal w_{Opt}, die mit Bezugszeichen 24 gekennzeichneten Wünsche und Bedürfnisse weiterer Fahrzeuginsassen 22 herangezogen werden.

So kann die Information w_{Opt}, vorzugsweise automatisch, so angepasst werden, dass die Fahrt von den meisten Insassen als angemessen empfunden wird. Wird beispielsweise ein Baby als Fahrzeuginsasse identifiziert, wird eine Fahrt mit möglichst geringen Beschleunigungskräften als besonders erstrebenswert angesehen und die vorausberechnete Fahrt dahingehend optimiert.

Fig. 10 zeigt eine schematische Darstellung einer Fahrt eines Fahrzeugs 1 unter Anwendung einer Verfahrensvariante. Im gezeigten Beispiel soll das Fahrzeug 1 eine Kurve 30 entlang der Richtung R durchfahren. Seitens des Assistenzsystem wurde dafür ein nicht dargestellter erster Fahrweg berechnet. Die Lenksignale des Fahrers korrespondieren im gezeigten Beispiel jedoch nicht oder nur bedingt zu einer Fahrt entlang dieses ersten Fahrwegs. Die Lenksignale korrespondieren beispielsweise mangels Fahrerfahrung und/oder aufgrund der Nutzung einer ungewohnten Mensch-Maschine-Schnittstelle wie einem Joystick oder Touchpad nicht zu der berechneten Trajektorie sondern zu einer geschlängelt verlaufenden Trajektorie 32.

In diesem Fall erkennt das Assistenzsystem die Intention des Fahrers durch die Kurve zu fahren und kombiniert diese Intention mit einem möglichen Fahrziel, nämlich materialschonend und/oder mit möglichst geringen Querbeschleunigungsspitzen durch die Kurve zu fahren. In diesem Fall korrigiert das Assistenzsystem die Kurvenfahrt dahingehend, dass das Fahrzeug sich - trotz der anderslautenden Eingabe des Fahrers - auf dem zweiten Fahrweg, der Trajektorie 34 fortbewegt. Es wird also - zumindest bezüglich der Lenkung und zumindest temporär - eine weitgehende Entkopplung des Fahrers vorgenommen.

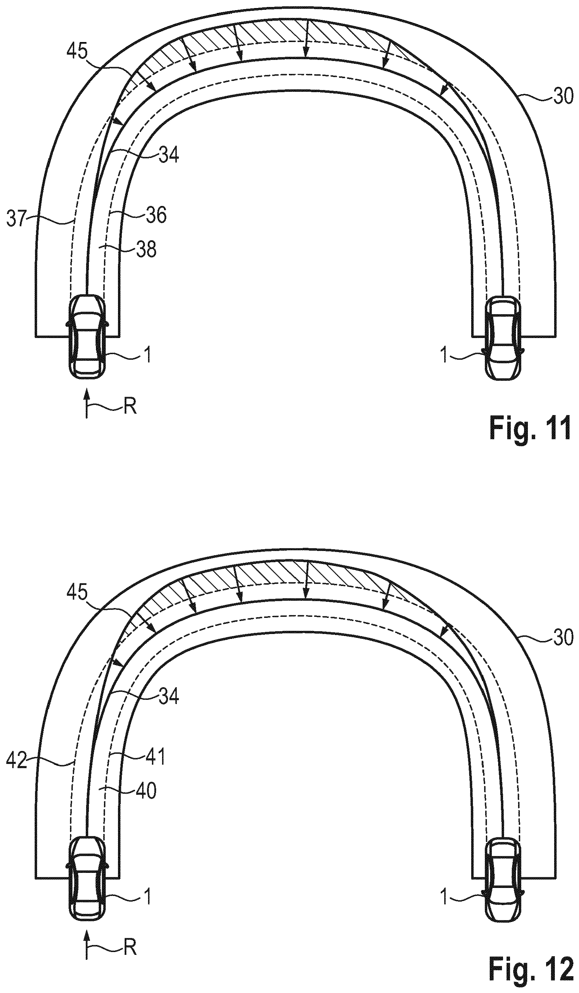

Fig. 11 zeigt eine weitere schematische Darstellung einer Fahrt eines Fahrzeugs 1 unter Anwendung einer Verfahrensvariante. Im gezeigten Beispiel fährt der Fahrer auf eine ihm unbekannte Kurve 30 zu. Unter den Bedingungen unter denen er in die Kurve einfährt würde er einen mit Bezugszeichen 38 gekennzeichneten Konsistenzbereich, in dem dieser Fahrer normalerweise erwartungsgemäß fahren würde, verlassen und das Fahrzeug 1 zumindest zeitweilig in (Gefahren-) Bereich 45 gelangen. Das Assistenzsystem erkennt diese aus der Fehlerhaften Ansteuerung durch den Fahrer ergebende Gefahr oder das sich ergebende nachteilige Fahrerlebnis und korrigiert die Steuersignale des Fahrers, so dass das Fahrzeug 1 sicher oder aufs subjektive Empfinden optimiert entlang der neu berechneten Trajektorie 34 fährt, welche vollständig innerhalb des sicher Zielkorridors 38 und dem Konsistenzbereich dieses Fahrers liegt.

Der Zielkorridor 38 könnte beispielsweise für die jeweilige Kurve 30 durch entsprechende Navigationsdaten vorgegeben sein. Vorzugsweise wird der Zielkorridor 38 jedoch aus den Navigationsdaten und einem dem Assistenzsystem für diesen Fahrer bekannten Konsistenzbereich berechnet. So können zur Berechnung dieser Kurvendurchfahrt Informationen aus vorherigen Kurvendurchfahrten dieses Fahrers herangezogen werden. So kann beispielsweise ein unterschiedliches fahrerischen Können und/oder Vorlieben dieses Fahrers auch zur Berechnung einer sicheren zukünftigen Kurvenfahrt herangezogen werden. In Fig. 12 ist eine der Fig. 11 sehr ähnliche Situation einer Fahrt eines Fahrzeugs 1 unter Anwendung einer Verfahrensvariante schematisch dargestellt. Als Ziel ist hier jedoch ein hoher Fahrkomfort gewählt. Dieses Ziel kann bei der Durchfahrt der Kurve 30 nicht erreicht werden, wenn das Fahrzeug 1 dem Steuerbefehl des Fahrers folgt und in den mit Bezugszeichen 45 gekennzeichneten Bereich (beispielsweise mit großer Querbeschleunigung) gelangt. Daher greift das Assistenzsystem ein und berechnet aus den Steuerdaten des Fahrers einen zweiten Fahrweg 34, der vollständig innerhalb des komfortablen Bereichs 40 liegt. Anschließend wird das Fahrzeug (gegebenenfalls entkoppelt von Fahrerbefehlen durch eine entsprechend veränderte Ansteuerung der Aktoren auf der Trajektorie 34 durch die Kurve 30 geführt.

### Bezugszeichenliste

- 1: Fahrzeug
- 2: Fahrer
- 4: Gewünschtes, optimales Fahrerlebnis
- 6: aktueller Fahrzustand, aktuelle Fahrsituation
- 10: Assistenzsystem, Driving Enhancing System
- 11: System
- 12, 14, 16, 18: Verfahrensschritte
- 20: Optimales Fahrerlebnis
- 22: Fahrzeuginsassen
- 24: Insassenwunsch, Bedürfnisse
- 30: Fahrbahn, Kurve
- 32: Trajektorie, schlechtes Fahrmuster
- 34: Berechnete/gefahrene Trajektorie
- 36, 37: Grenzen des Konsistenzbereichs
- 38: Konsistenzbereich
- 40: Komfortbereich
- 41, 42: Grenzen des Komfortbereichs
- 45: (Gefahren-) Bereich
- A: Aktion
- u_{D}: Steuersignal
- w_{Opt}: Information,
- u_{AS}: (optimiertes) Steuersignal
- x: Weitere Faktoren
- F: Rückmeldung, Feedback
- E: Entkopplung
- G: Assistenz, Unterstützung
- M: Manuelle Fahrt, manuelle Steuerung
- E1 - E5: Grad der Entkopplung
- I1 - I4: Grad der Entkopplung
- FF: Rückmeldung, Feedback
- LS: Unmittelbares Lenkgefühl
- FS: Fiktives Lenkgefühl
- L0: Ursprung
- GLM: Geringes Lenkmoment
- LM: Starkes Lenkmoment
- LME: Lenkmoments bei vollständiger Entkopplung
- S: System
- B: "objektive" Information
- AB: Planungsadaption
- FD1 - FD3: Fahrmodi
- R: Richtung

## Patentansprüche

1. Verfahren zur Steuerung eines Fahrzeugs (1) durch ein Assistenzsystem (10) umfassend die Schritte:
a) Erfassen von Umgebungsdaten eines Fahrzeugs (1) durch eine Sensoreinrichtung;
b) Berechnungen eines ersten Fahrwegs des Fahrzeugs (1) zu einem Ziel und eines Fahrzeugzustands an mindestens einem Punkt dieses Fahrwegs basierend auf den Umgebungsdaten mittels einer ersten Rechnereinrichtung;
c) Erfassen einer Fahranweisung (A) eines Fahrers (2) durch mindestens eine Mensch-Maschine-Schnittstelle;
d) Ermitteln eines Korrelationswertes basierend auf
- der Fahranweisung (A) und
- dem vorausberechneten Fahrweg des Fahrzeugs und/oder dem vorausberechneten Fahrzeugzustand;
e) Überprüfen ob der Korrelationswert einen kritischen Korrelationsgrenzwert unterschreitet durch eine zweite Rechnereinrichtung, und falls der Korrelationswert den kritischen Korrelationsgrenzwert unterschreitet;
Umwandeln eines von der Mensch-Maschine-Schnittstelle erfassten Datums (u_{D}), welches charakteristisch für die Fahranweisung (A) des Fahrers (2) ist, in ein Steuersignal (u_{AS}), welches nicht eineindeutig zu dem erfassten Datum (u_{D}) ist, wobei das Steuersignal (u_{AS}) das Fahrzeug (1) oder eine Fahrzeugkomponente auf einem zum selben Ziel führenden zweiten Fahrweg ansteuert, wobei das Fahrzeug (1) auf jedem Punkt dieses zweiten Fahrwegs einen stabilen Fahrzeugzustand einnimmt, wobei
die Mensch-Maschine-Schnittstelle einen optischen und/oder akustischen Signalgeber aufweist, wobei der Signalgeber ein Anzeigeelement ist, durch welches dem Fahrer eine Information zu einer Abweichung von der durch das Assistenzsystem erwarteten Fahrereingabe und der tatsächlich getätigten Eingabe dargestellt wird.

2. Verfahren nach Anspruch 1, **dadurch gekennzeichnet, dass** die Berechnung des zweiten Fahrwegs unter Berücksichtigung von Daten zu einem Fahrmodus und/oder einer Fahrcharakteristik eines Fahrers (2), mehrerer Fahrer und/oder einer Fahrergruppe erfolgt, die aus einer Datenbank geladen werden, wobei die Fahrmodi (FD1 - FD3) ausgewählt sind aus einer Gruppe, die einen Komfortfahrmodus, einen Energiesparmodus, einen Sportmodus, einen Schnellstraßenmodus, einen Stadtverkehrsmodus, einen Langstreckenmodus, einen Arbeitsmodus, einen Trainingsmodus, einen Personentransportmodus, eine Warentransportmodus und einen Gefahrguttransportmodus umfasst.

3. Verfahren nach einem der vorangegangenen Ansprüche, **dadurch gekennzeichnet, dass** ein Signal (u_{D}) zwischen der Mensch-Maschine-Schnittstelle und einem Aktuator zur Steuerung des Fahrzeugs (1) elektrisch übertragen wird, wobei das Fahrzeug (1) vorzugsweise per X-by-Wire-Steuerung gesteuert wird und an der Mensch-Maschine-Schnittstelle eine Eingabe eines Signals (A) zur Steuerung des Fahrzeugs (1) gegeben wird.

4. Verfahren nach einem der vorangegangenen Ansprüche, **dadurch gekennzeichnet, dass** dem Fahrer (2) eine Rückmeldung (f) über eine Abweichung seines durch die Mensch-Maschine-Schnittstelle erfassten Zustandes und/oder seiner durch die Mensch-Maschine-Schnittstelle erfasste Fahranweisung (A) von einem erwarteten Zustand und/oder einer erwarteten Eingabe zur Bewegung des Fahrzeugs (1) auf dem vorherberechneten Fahrweg gegeben wird, wobei ein zu der Rückmeldung (f) korrelierendes Datum in einer Datenbank gespeichert wird, um einen Lern- und/oder Trainingseffekt des Fahrers basierend auf einer Vielzahl von zu Rückmeldungen korrelierenden Daten erfassen und/oder dokumentieren zu können.

5. Verfahren nach einem der vorangegangenen Ansprüche, **dadurch gekennzeichnet, dass** der kritische Korrelationsgrenzwert durch den Fahrer (2) oder eine andere autorisierte Stelle festgelegt wird, wobei dieser kritische Korrelationsgrenzwert für einzelne Steuersignalgeber und/oder Steuersignalgebergruppen separat festgelegt werden kann.

6. Verfahren nach einem der vorangegangenen Ansprüche, **dadurch gekennzeichnet, dass**, basierend auf Daten einer Vielzahl von Fahrten eines Fahrers (2) unvorteilhafte Fahrmuster und/oder Fahrcharakteristika erkannt werden.

7. Verfahren nach einem der vorangegangenen Ansprüche, **dadurch gekennzeichnet, dass** mindestens ein Sensor den Fahrer (2) und/oder einen Fahrzeuginsassen (22) überwacht und/oder erkennt.

8. Verfahren nach einem der vorangegangenen Ansprüche, **dadurch gekennzeichnet, dass** mindestens einer der Schritte a) bis f), vorzugsweise mehrere der Schritte a) bis f) weiter bevorzugt mehrere der Schritte b), d) e) und f), insbesondere bevorzugt alle der Schritte b), d) e) und f) rechnergestützt, bevorzugt als computerimplementierter Verfahrensschritt durchgeführt werden.

9. Verfahren nach einem der vorangegangenen Ansprüche, **dadurch gekennzeichnet, dass** durch das Assistenzsystem ein virtueller dreidimensionaler Raum aufgespannt wird, dessen Dimensionen
- ein Grad der Entkopplung (E) einer Fahrereingabe an der Mensch-Maschine-Schnittstelle von einem korrespondierenden Aktuatorsignal,
- ein Grad der Manipulation (FL, LS) des vom Fahrer gegebenen Steuersignals in eine Ansteuerung eines korrespondierenden Aktuators, und
- eine Intensität einer Rückmeldung (FF) an den Fahrer sind,
wobei durch das Assistenzsystem jedem Fahrer mindestens ein Punkt in diesem virtuellen Raum zugeordnet wird, wobei dieser Punkt zu einem für diesen Fahrer geeigneten und/oder von diesem Fahrer als angenehm empfundenen Steuer- und/oder Rückmeldeverhalten des Assistenzsystems korreliert,
wobei der einem Fahrer zugewiesene Punkt in Abhängigkeit der Fahrsituation entlang einer vorzugsweise stetigen Kurve in diesem dreidimensionalen Raum verschoben wird.

10. Assistenzsystem (10) zur zumindest teilautonomen Steuerung eines Fahrzeugs (1) umfassend eine Sensoreinrichtung zur Erfassung von Umgebungsdaten, eine erste Rechnereinrichtung zur Vorausberechnungen eines ersten Fahrwegs des Fahrzeugs (1) zu einem Ziel und eines Fahrzeugzustands an mindestens einem Punkt dieses Fahrwegs basierend auf den Umgebungsdaten, mindestens eine Mensch-Maschine-Schnittstelle, welche zur Erfassung einer Fahranweisung (A) eines Fahrers (2) bestimmt und eingerichtet ist, eine Korrelationswertermittlungseinrichtung, welche dazu bestimmt und eingerichtet ist, basierend einerseits auf der Fahranweisung (A) und anderseits auf dem vorausberechneten Fahrweg des Fahrzeugs und/oder dem vorausberechneten Fahrzeugzustand einen Korrelationswert zu ermitteln, und eine zweite Rechnereinrichtung, welche dazu bestimmt und eingerichtet ist, zu überprüfen, ob der Korrelationswert einen kritischen Korrelationsgrenzwert unterschreitet, und falls der Korrelationswert den kritischen Korrelationsgrenzwert unterschreitet, ein von der Mensch-Maschine-Schnittstelle erfasstes Datum (u_{D}), welches charakteristisch für die Fahranweisung (A) des Fahrers (2) ist, in ein Steuersignal (u_{AS}) umzuwandeln, welches nicht eineindeutig zu dem erfassten Datum (u_{D}) ist, wobei das Steuersignal (u_{AS}) mit einem zum selben Ziel führenden zweiten Fahrweg korreliert, auf welchem das Fahrzeug (1) in jedem Punkt einen stabilen Fahrzeugzustand führbar ist, wobei die Mensch-Maschine-Schnittstelle einen optischen und/oder akustischen Signalgeber aufweist, wobei der Signalgeber ein Anzeigeelement ist, durch welches dem Fahrer eine Information zu einer Abweichung von der durch das Assistenzsystem erwarteten Fahrereingabe und der tatsächlich getätigten Eingabe dargestellt wird.

11. Assistenzsystem (10) nach Anspruch 10, **dadurch gekennzeichnet, dass** die Mensch-Maschine-Schnittstelle eine Rückmeldeeinrichtung aufweist, mittels welcher einem Fahrer (2) ein Ergebnis der Korrelationswertermittlung durch die Korrelationswertermittlungseinrichtung übermittelbar ist, wobei eine Stärke eines Rückmeldesignals (FF) der Rückmeldeeinrichtung zu einem Betrag korreliert, um der Korrelationsgrenzwert unterschritten ist, wobei ein Verhältnis der Stärke des Rückmeldesignals (FF) zu dem Betrag der Unterschreitung durch den Fahrer vorgebbar ist.

12. Assistenzsystem (10) nach Anspruch 10 oder 11, **dadurch gekennzeichnet, dass** die Mensch-Maschine-Schnittstelle elektrisch mit einem Aktuator zur Steuerung des Fahrzeugs (1) in Verbindung steht, wobei die Mensch-Maschine-Schnittstelle Teil einer X-by-Wire-Steuerung des Fahrzeugs (1) ist.

13. Assistenzsystem (10) nach einem der Ansprüche 10 - 12, **dadurch gekennzeichnet, dass** zwischen der zweiten Rechnereinrichtung und einer Datenbank eine Datenverbindung besteht, wobei in der Daten Daten zu Fahrcharakteristika eines Fahrers, mehrerer Fahrer, einer Fahrergruppe und/oder verschiedenen Fahrmodi abgelegt sind, wobei mindestens einer der in der Datenbank abgelegten Datensätze mit einem Fahrmodus (FD1 - FD3) korreliert, der ausgewählt ist aus einer Gruppe, die einen Komfortfahrmodus, einen Energiesparmodus, einen Sportmodus, einen Schnellstraßenmodus, einen Stadtverkehrsmodus, einen Langstreckenmodus, einen Arbeitsmodus, einen Trainingsmodus, einen Personentransportmodus, eine Warentransportmodus und einen Gefahrguttransportmodus umfasst.

14. Assistenzsystem (10) nach einem der Ansprüche 9 - 13, **dadurch gekennzeichnet, dass** die Korrelationswertermittlungseinrichtung und/oder die zweite Rechnereinrichtung ein System künstlicher Intelligenz umfasst oder mit einem solchen System zumindest zeitweise in Datenverbindung steht, wobei die Korrelationswertermittlungseinrichtung und/oder die zweite Rechnereinrichtung zur Erkennung eines Musters in der Abweichung der Korrelation zwischen der Fahranweisung des Fahrers und der erwarteten Fahranweisung des Fahrers zum Folgen des Vorausberechnungen eines Fahrwegs vorgesehen und eingerichtet ist und dieses Muster vorzugsweise in einer Datenbank gespeichert ist, welche eine Grundlage für zukünftige Berechnungen eines Fahrwegs des Fahrzeugs bildet.

15. Fahrzeug (1), insbesondere Kraftfahrzeug, umfassend ein Assistenzsystem (10) gemäß einem der Ansprüche 10 - 14.

## Claims

1. Method for controlling a vehicle (1) by means of an assistance system (10), the method comprising the steps of:
a) a sensor device capturing surroundings data of a vehicle (1);
b) calculating, by means of a first computer device, a first route for the vehicle (1) to a destination and a vehicle state at at least one point on this route on the basis of the surroundings data;
c) at least one human-machine interface recording a driving instruction (A) from a driver (2);
d) determining a correlation value on the basis of
- the driving instruction (A) and
- the precalculated route for the vehicle and/or the precalculated vehicle state;
e) a second computer device checking whether the correlation value is below a critical correlation limit value and, if the correlation value is below the critical correlation limit value;
converting a datum (u_{D}), recorded by the human-machine interface and characteristic of the driving instruction (A) from the driver (2), into a control signal (u_{AS}) which does not correspond to the recorded datum (u_{D}) in a one-to-one relationship, wherein the control signal (u_{AS}) controls the vehicle (1) or a vehicle component along a second route leading to the same destination, wherein the vehicle (1) adopts a stable vehicle state at every point on this second route, wherein
the human-machine interface has an optical and/or acoustic signal generator, wherein the signal generator is a display element that shows the driver information relating to a discrepancy between the driver input expected by the assistance system and the input actually given.

2. Method according to claim 1, **characterized in that** the second route is calculated taking into account data, loaded from a database, relating to a driving mode and/or a driving characteristic of a driver (2), of a plurality of drivers, and/or of a group of drivers, wherein the driving modes (FD1 - FD3) are selected from a group which includes a comfort driving mode, an energy-saving mode, a sports mode, a highway mode, a city traffic mode, a long-distance mode, a work mode, a training mode, a passenger transport mode, a goods transport mode, and a dangerous goods transport mode.

3. Method according to either of the preceding claims, **characterized in that** a signal (u_{D}) is electrically transferred between the human-machine interface and an actuator for controlling the vehicle (1), wherein the vehicle (1) is preferably controlled via X-by-wire control and an input of a signal (A) for controlling the vehicle (1) is given at the human-machine interface.

4. Method according to any of the preceding claims, **characterized in that** the driver (2) is given feedback (f) about a deviation of their state, recorded by the human-machine interface, and/or of their driving instruction (A), recorded by the human-machine interface, from an expected state and/or from an expected input for moving the vehicle (1) along the precalculated route, wherein a datum correlating to the feedback (f) is saved in a database in order to be able to record and/or document a learning and/or training effect on the driver on the basis of a plurality of data correlating to feedback.

5. Method according to any of the preceding claims, **characterized in that** the critical correlation limit value is set by the driver (2) or another authorized body, wherein this critical correlation limit value can be set separately for individual control signal generators and/or control signal generator groups.

6. Method according to any of the preceding claims, **characterized in that** unfavorable driving patterns and/or driving characteristics are detected on the basis of data from a plurality of journeys undertaken by a driver (2).

7. Method according to any of the preceding claims, **characterized in that** at least one sensor monitors and/or detects the driver (2) and/or a vehicle occupant (22).

8. Method according to any of the preceding claims, **characterized in that** at least one of the steps a) to f), preferably a plurality of the steps a) to f), further preferably a plurality of the steps b), d), e), and f), particularly preferably all of the steps b), d), e), and f), are performed with the aid of a computer, preferably as a computer-implemented method step.

9. Method according to any of the preceding claims, **characterized in that** a virtual, three-dimensional space is spanned by the assistance system, the dimensions of which space are
- a degree to which a driver input at the human-machine interface is decoupled (E) from a corresponding actuator signal,
- a degree to which the control signal given by the driver is manipulated (FL, LS) into control of a corresponding actuator, and
- an intensity of feedback (FF) to the driver,
wherein each driver is assigned at least one point in this virtual space by the assistance system, wherein this point correlates to a control and/or feedback behavior, suitable for that driver and/or perceived as pleasant by that driver, of the assistance system,
wherein the point allocated to a driver is shifted along a preferably continuous curve in this three-dimensional space depending on the driving situation.

10. Assistance system (10) for at least partially autonomously controlling a vehicle (1) comprising a sensor device for capturing surroundings data, a first computer device for precalculating a first route for the vehicle (1) to a destination and a vehicle state at at least one point on this route on the basis of the surroundings data, at least one human-machine interface intended and configured to record a driving instruction (A) from a driver (2), a correlation value determination device intended and configured to determine a correlation value on the basis both of the driving instruction (A) and of the precalculated route for the vehicle and/or the precalculated vehicle state, and a second computer device intended and configured to check whether the correlation value is below a critical correlation limit value and, if the correlation value is below the critical correlation limit value, to convert a datum (u_{D}), recorded by the human-machine interface and characteristic of the driving instruction (A) from the driver (2), into a control signal (u_{AS}) which does not correspond to the recorded datum (u_{D}) in a one-to-one relationship, wherein the control signal (u_{AS}) correlates to a second route, leading to the same destination, on which the vehicle (1) can be guided in a stable vehicle state at every point, wherein the human-machine interface has an optical and/or acoustic signal generator, wherein the signal generator is a display element that shows the driver information relating to a discrepancy between the driver input expected by the assistance system and the input actually given.

11. Assistance system (10) according to claim 10, **characterized in that** the human-machine interface has a feedback device by means of which a result of the correlation value determination performed by the correlation value determination device can be transmitted to a driver (2), wherein a strength of a feedback signal (FF) from the feedback device correlates to an amount by which the correlation value is below the correlation limit value, wherein a ratio of the strength of the feedback signal (FF) to the amount by which the correlation value is below the correlation limit value can be specified by the driver.

12. Assistance system (10) according to claim 10 or 11, **characterized in that** the human-machine interface is electrically connected to an actuator for controlling the vehicle (1), wherein the human-machine interface is part of an X-by-wire controller of the vehicle (1).

13. Assistance system (10) according to any of claims 10-12,
**characterized in that** the second computer device and a database are connected in terms of data, wherein in the data are stored data relating to the driving characteristics of a driver, of a plurality of drivers, a group of drivers, and/or relating to different driving modes, wherein at least one of the datasets stored in the database correlates to a driving mode (FD1 - FD3) selected from a group which includes a comfort driving mode, an energy-saving mode, a sports mode, a highway mode, a city traffic mode, a long-distance mode, a work mode, a training mode, a passenger transport mode, a goods transport mode, and a dangerous goods transport mode.

14. Assistance system (10) according to any of claims 9-13,
**characterized in that** the correlation value determination device and/or the second computer device comprises an artificial intelligence system or is at least temporarily connected in terms of data to such a system, wherein the correlation value determination device and/or the second computer device is provided and configured to detect a pattern in the discrepancy of the correlation between the driving instruction from the driver and the expected driving instruction from the driver to follow the precalculations of a route and this pattern is preferably saved in a database which forms a basis for future calculations of a route for the vehicle.

15. Vehicle (1), in particular a motor vehicle, comprising an assistance system (10) according to any of claims 10-14.

## Revendications

1. Procédé de commande d'un véhicule (1) par un système d'assistance (10), comprenant les étapes de :
a) détection de données environnementales d'un véhicule (1) par un dispositif capteur ;
b) calcul, par le biais d'un premier dispositif informatique, d'un premier trajet du véhicule (1) vers une destination et d'un état de véhicule en au moins un point de ce trajet, sur la base des données environnementales ;
c) détection d'une instruction de conduite (A) d'un conducteur (2) par au moins une interface homme-machine ;
d) détermination d'une valeur de corrélation basée sur
- l'instruction de conduite (A) et
- le trajet calculé à l'avance du véhicule et/ou l'état de véhicule calculé à l'avance ;
e) vérification établissant si la valeur de corrélation est inférieure à une valeur limite de corrélation critique par un second dispositif informatique, et si la valeur de corrélation est inférieure à la valeur limite de corrélation critique ;
conversion d'une donnée (u_{D}) détectée par l'interface homme-machine, qui est caractéristique de l'instruction de conduite (A) du conducteur (2), en un signal de commande (u_{AS}) qui n'est pas univoque par rapport à la donnée (u_{D}) détectée, dans lequel le signal de commande (u_{AS}) commande le véhicule (1) ou un composant de véhicule sur un second trajet menant à la même destination, dans lequel le véhicule (1) adopte un état de véhicule stable sur chaque point de ce second trajet, dans lequel
l'interface homme-machine présente un générateur de signaux optiques et/ou acoustiques, dans lequel le générateur de signaux est un élément d'affichage par lequel une information concernant un écart entre l'entrée de conducteur attendue par le système d'assistance et l'entrée effectivement effectuée est présentée au conducteur.

2. Procédé selon la revendication 1, **caractérisé en ce que** le calcul du second trajet est effectué en tenant compte de données relatives à un mode de conduite et/ou à une caractéristique de conduite d'un conducteur (2), de plusieurs conducteurs et/ou d'un groupe de conducteurs, qui sont chargées à partir d'une base de données, dans lequel les modes de conduite (FD1 - FD3) sont choisis dans un groupe comprenant un mode de conduite confortable, un mode d'économie d'énergie, un mode sportif, un mode de conduite sur voie rapide, un
mode de conduite en ville, un mode de transport longue distance, un mode de travail, un mode d'entraînement, un mode de transport de personnes, un mode de transport de marchandises et un mode de transport de matières dangereuses.

3. Procédé selon l'une des revendications précédentes,
**caractérisé en ce qu'**un signal (u_{D}) est transmis électriquement entre l'interface homme-machine et un actionneur pour commander le véhicule (1), dans lequel le véhicule (1) est de préférence commandé par commande X électrique et une entrée d'un signal (A) est donnée à l'interface homme-machine pour commander le véhicule (1).

4. Procédé selon l'une des revendications précédentes,
**caractérisé en ce qu'**un retour d'information (f) est donné au conducteur (2) sur un écart de son état détecté par l'interface homme-machine et/ou de son instruction de conduite (A) détectée par l'interface homme-machine par rapport à un état attendu et/ou une entrée attendue pour le déplacement du véhicule (1) sur le trajet calculé à l'avance, dans lequel une donnée en corrélation avec le retour d'information (f) est enregistrée dans une base de données afin de pouvoir détecter et/ou documenter un effet d'apprentissage et/ou d'entraînement du conducteur sur la base d'une pluralité de données en corrélation avec les retours d'information.

5. Procédé selon l'une des revendications précédentes,
**caractérisé en ce que** la valeur limite de corrélation critique est fixée par le conducteur (2) ou par un autre organisme autorisé, dans lequel cette valeur limite de corrélation critique peut être fixée séparément pour des générateurs de signaux de commande individuels et/ou des groupes de générateurs de signaux de commande.

6. Procédé selon l'une des revendications précédentes,
**caractérisé en ce que,** sur la base de données d'une pluralité de trajets d'un conducteur (2), des modèles de conduite et/ou des caractéristiques de conduite défavorables sont reconnus.

7. Procédé selon l'une des revendications précédentes,
**caractérisé en ce qu'**au moins un capteur surveille et/ou reconnaît le conducteur (2) et/ou un occupant de véhicule (22).

8. Procédé selon l'une des revendications précédentes, **caractérisé en ce qu'**au moins l'une des étapes a) à f), de préférence plusieurs des étapes a) à f), de manière encore
préférée plusieurs des étapes b), d) e) et f), de manière particulièrement préférée toutes les étapes b), d) e) et f) sont réalisées à l'aide d'un ordinateur, de préférence comme étape de procédé mise en œuvre par ordinateur.

9. Procédé selon l'une des revendications précédentes,
**caractérisé en ce qu'**un espace virtuel tridimensionnel est tendu par le système d'assistance, dont les dimensions sont
- un degré de découplage (E) entre une entrée de conducteur au niveau de l'interface homme-machine et un signal d'actionneur correspondant,
- un degré de manipulation (FL, LS) du signal de commande donné par le conducteur en une commande d'un actionneur correspondant, et
- une intensité de retour d'information (FF) au conducteur,
dans lequel au moins un point dans cet espace virtuel est attribué à chaque conducteur par le système d'assistance, dans lequel ce point est corrélé à un comportement de commande et/ou de retour d'information du système d'assistance approprié pour ce conducteur et/ou perçu comme agréable par ce conducteur,
dans lequel le point attribué à un conducteur est décalé en fonction de la situation de conduite le long d'une courbe, de préférence continue, dans cet espace tridimensionnel.

10. Système d'assistance (10) pour la commande au moins partiellement autonome d'un véhicule (1) comprenant un dispositif capteur pour la détection de données d'environnement, un premier dispositif de calcul pour le calcul préalable d'un premier trajet du véhicule (1) vers une destination et d'un état de véhicule en au moins un point de ce trajet sur la base des données d'environnement, au moins une interface homme-machine, qui est destinée et conçue pour la détection d'une instruction de conduite (A) d'un conducteur (2), un dispositif de détermination de valeur de corrélation qui est destiné et conçu pour déterminer une valeur de corrélation sur la base d'une part de l'instruction de conduite (A) et d'autre part du trajet calculé à l'avance du véhicule et/ou de l'état de véhicule calculé à l'avance, et un second dispositif de calcul qui est destiné et conçu pour vérifier, si la valeur de corrélation est inférieure à une valeur limite de corrélation critique et, si la valeur de corrélation est inférieure à la valeur limite de corrélation critique, convertir une donnée (u_{D}) détectée par l'interface homme-machine, qui est caractéristique de l'instruction de conduite (A) du conducteur (2), en un signal de commande (u_{AS}) qui n'est pas univoque par rapport à la donnée (u_{D}) détectée, dans lequel le signal de commande (u_{AS}) est corrélé avec un second trajet menant à la même destination, sur lequel le véhicule (1) peut être guidé en tout point dans un état de véhicule stable, dans lequel l'interface homme-machine présente un générateur de signaux optiques et/ou acoustiques, dans lequel le générateur de signaux est un élément d'affichage par lequel une information concernant un écart entre l'entrée du conducteur attendue par le système d'assistance et l'entrée effectivement effectuée est présentée au conducteur.

11. Système d'assistance (10) selon la revendication 10,
**caractérisé en ce que** l'interface homme-machine présente un dispositif de retour d'information par le biais duquel un résultat de la détermination de valeur de corrélation par le dispositif de détermination de valeur de corrélation peut être transmis à un conducteur (2), dans lequel une intensité d'un signal de retour d'information (FF) du dispositif de retour d'information est corrélée à une grandeur dont la limite de corrélation n'est pas atteinte, dans lequel un rapport entre l'intensité du signal de retour d'information (FF) et la grandeur dont la limite n'est pas atteinte peut être prédéfini par le conducteur.

12. Système d'assistance (10) selon la revendication 10 ou 11,
**caractérisé en ce que** l'interface homme-machine est en liaison électrique avec un actionneur pour la commande du véhicule (1), dans lequel l'interface homme-machine faisant partie d'une commande X électrique du véhicule (1).

13. Système d'assistance (10) selon l'une des revendications 10 à 12, **caractérisé en ce qu'**une liaison de données existe entre le second dispositif de calcul et une banque de données, dans lequel des données relatives aux caractéristiques de conduite d'un conducteur, de plusieurs conducteurs, d'un groupe de conducteurs et/ou de différents modes de conduite sont stockées dans les données, dans lequel au moins l'un des jeux de données stockés dans la banque de données est en corrélation avec un mode de conduite (FD1 - FD3), qui est choisi dans un groupe comprenant un mode de conduite confortable, un mode d'économie d'énergie, un mode sportif, un mode de conduite sur voie rapide, un mode de conduite en ville, un mode de conduite sur longue distance, un mode de travail, un mode d'entraînement, un mode de transport de personnes, un mode de transport de marchandises et un mode de transport de matières dangereuses.

14. Système d'assistance (10) selon l'une des revendications 9 à 13, **caractérisé en ce que** le dispositif de détermination de valeur de corrélation et/ou le second dispositif de calcul comprend un système d'intelligence artificielle ou est en liaison de données au moins temporairement avec un tel système, dans lequel le dispositif de détermination de valeur de corrélation et/ou le second dispositif de calcul est prévu et conçu pour reconnaître un modèle dans l'écart de la corrélation entre l'instruction de conduite du conducteur et l'instruction de conduite attendue du conducteur pour suivre le calcul à l'avance d'un trajet et ce modèle est de préférence enregistré dans une base de données qui constitue une base pour les calculs futurs d'un trajet du véhicule.

15. Véhicule (1), en particulier véhicule automobile, comprenant un système d'assistance (10) selon l'une des revendications 10 à 14.
